# EUROPÄISCHE PATENTSCHRIFT

(11) **EP 3 994 351 B1**
(45) Veröffentlichungstag und Bekanntmachung des Hinweises auf die Patenterteilung: **21.08.2024**
(21) Anmeldenummer: 20732871.7
(22) Anmeldetag: 12.06.2020
(51) Int. Cl.: F03D 1/06

(54) **ROTORBLATT FÜR EINE WINDENERGIEANLAGE, ROTORBLATTSEGMENT, WINDENERGIEANLAGE UND VERFAHREN ZUR HERSTELLUNG EINES ROTORBLATTES**
ROTOR BLADE FOR A WIND TURBINE, ROTOR BLADE SEGMENT, WIND TURBINE, AND METHOD FOR PRODUCING A ROTOR BLADE
PALE DE ROTOR POUR UNE ÉOLIENNE, SEGMENT DE PALE DE ROTOR, ÉOLIENNE ET PROCÉDÉ POUR LA FABRICATION D'UNE PALE DE ROTOR

(30) Priorität: 05.07.2019 DE 102019118317
(43) Veröffentlichungstag der Anmeldung: 11.05.2022
(73) Patentinhaber: Wobben Properties GmbH, 26607 Aurich (DE)
(72) Erfinder: SPIETH, Falk, 26603 Aurich (DE)
(74) Vertreter: Eisenführ Speiser
(86) Internationale Anmeldenummer: PCT/EP2020/066345
(87) Internationale Veröffentlichungsnummer: WO 2021/004723

(56) Entgegenhaltungen:
- EP-A1- 3 144 526
- US-A1- 2008 069 699
- US-A1- 2011 158 788
- US-A1- 2012 308 396

## Beschreibung

Die Erfindung betrifft ein Rotorblatt für eine Windenergieanlage, eine Windenergieanlage und ein Verfahren zur Herstellung eines Rotorblattes.

Windenergieanlagen der eingangs genannten Art sind bekannt. Der derzeit gängigste Typ einer Windenergieanlage ist die sogenannte Horizontalachsen-Windenergieanlage, die üblicherweise mit drei Rotorblättern ausgestattet ist, wobei auch Windenergieanlagen mit einem, zwei, vier oder mehr Rotorblättern möglich sind.

Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist. Der Rotor umfasst neben mindestens einem der eingangs bezeichneten Rotorblätter eine Nabe, an der das mindestens ein Rotorblatt angeordnet ist. Auf die Rotorblätter wirken dabei sowohl eine statische Last aufgrund des Eigengewichts der Rotorblätter, als auch Fliehkräfte, die bei der Rotation entstehen.

Windenergieanlagen weisen zunehmend größere Bauformen auf, um einerseits eine höhere Nennleistung erreichen zu können, und andererseits eine bessere Ausnutzung des Windes zu ermöglichen. Als Folge der zunehmend größeren Bauformen werden die Rotorblätter von Windenergieanlagen zumeist segmentiert hergestellt, wobei mehrere Rotorsegmente miteinander verbunden werden. Eine solche Segmentierung ist nicht zuletzt aus Transportgründen zwingend notwendig.

Durch die Segmentierung der Rotorblätter wirken insbesondere auf die Verbindungsstellen hohe statische und dynamische Kräfte. Durch die zunehmend größeren Bauformen sind dabei die statischen und dynamischen Kräfte, verglichen mit kleineren Anlagen erhöht. Somit steigen mit zunehmender Baugröße der Rotorblätter auch die Anforderungen an die Verbindungsstellen.

Darüber hinaus werden an diesen Verbindungsstellen in der Regel hohe Sicherheitsfaktoren berücksichtigt, um den Abbruch eines Rotorblattes möglichst auszuschließen. Ein Abbruch eines Rotorblatts führt einerseits zu Beschädigungen an der Windenergieanlage selbst, kann jedoch darüber hinaus erheblichen weiteren Schaden in der Umgebung der Windenergieanlage verursachen.

In solchen Verbindungsstellen werden zumeist Montageelemente verwendet. Diese Montageelemente können als Zusatzelemente in Form von Bolzen bereitgestellt werden, welche in das Rotorblattsegment eingeschraubt, bzw. einlaminiert werden und mit korrespondierenden Aufnahmen an einem benachbarten Rotorblattsegment in Eingriff bringbar sind. Um die auftretenden Lasten aufnehmen zu können, müssen solche Montageelemente entsprechend dimensioniert werden und führen somit zu einem erheblichen Mehrgewicht des Rotorblattes.

Das Deutsche Patent- und Markenamt hat in der Prioritätsanmeldung zu vorliegender Anmeldung folgenden Stand der Technik recherchiert: US 8 348 622 B2, US 2008/0 069 699 A1, US 2016/0 341 177 A1, US 2017/0 089 324 A1, US 2018/0 298 879 A1, WO 2003/0 78 833 A1. Ein weiteres Beispiel is aus EP 3 144 526 A1 bekannt.

Es ist daher Aufgabe der vorliegenden Erfindung, ein Rotorblatt für eine Windenergieanlage, eine Windenergieanlage und ein Verfahren zur Herstellung eines solchen Rotorblatts bereitzustellen, welches einen oder mehreren der genannten Nachteile vermindert oder beseitigt. Insbesondere ist es Aufgabe der Erfindung, eine Lösung bereitzustellen, die eine leichte und sichere Verbindung von Rotorblattsegmenten ermöglicht.

Gemäß einem ersten Aspekt der vorliegenden Erfindung wird die eingangs genannte Aufgabe durch ein Rotorblatt für eine Windenergieanlage gelöst, mit einer Längsrichtung (L), in welchen sich das Rotorblatt erstreckt, mindestens einem ersten Rotorblattsegment mit einer ersten Stirnseite, und mindestens einem zweiten Rotorblattsegment mit einer zweiten Stirnseite, wobei das erste Rotorblattsegment in Längsrichtung, stirnseitig mit dem zweiten Rotorblattsegment gekoppelt ist, wobei das erste und das zweite Rotorblattsegment jeweils umfassen: ein Blattlaminat mit einer Mehrzahl von Laminatschichten, welche in einer Profildickenrichtung (D) gestapelt angeordnet sind, und eine Mehrzahl von stirnseitig angeordneten Montageelementen zum Koppeln des ersten Rotorblattsegments mit dem zweiten Rotorblattsegment, wobei jedes der Montageelemente sich in Längsrichtung erstreckt, zwei Kontaktflächen aufweist, welche quer, insbesondere orthogonal, zur Längsrichtung (L) in einem Abstand zueinander angeordnet sind, der endseitig nichtlinear abnimmt.

Durch eine solche nichtlineare Abnahme des Abstandes der Kontaktflächen können Spannungsüberhöhungen an der Spitze des Montageelementes reduziert werden. Somit können die Spannungen in dem belasteten Bereich an der Spitze durch eine vergleichsweise geringe, insbesondere sanfte Abnahme des Abstandes der Kontaktflächen zueinander reduziert werden. In dem weniger belasteten mittleren Flankenbereich des Montageelements kann die Abnahme des Abstandes beispielsweise dann steiler zunehmen, da in diesem Bereich die Belastungen der Verbindung vergleichsweise gering sind. Somit wird durch die Montageelemente, eine leichte und sichere Verbindung benachbarter Rotorblattsegmente bereitgestellt.

Die Erfindung beruht unter anderem auf der Erkenntnis, dass durch die hier beschriebene Ausgestaltung Nachteile von Keilzink-Verbindungen, die aus entfernt liegenden Technik-Bereichen, wie beispielsweise dem Holzbau, bekannt sind, überwunden werden können, die ansonsten einer Anwendung für Rotorblätter großer Windenergieanlagen entgegenstehen.

Die Erfindung beruht unter anderem auch auf der Erkenntnis, dass bei existierenden Keilzink-Verbindungen, die eine Anwendung in Rotorblättern vorsehen, wie US 8 348 622 B2 und US 2016341177 A1, insbesondere Spannungsüberhöhungen an der Spitze jedes Keilzinkens nachteilig sind, welche sich an dieser Stelle aufgrund eines Steifigkeitssprunges konzentrieren. Diese Spannungsüberhöhungen führen zu einer massiven Belastung der Verbindung und insbesondere der Klebstelle und verstärken die Kleberspannungen und führen zu einer Kerbwirkung in dem angrenzenden Bereich des Blattlaminats. Durch diese Spannungsüberhöhungen an der Spitze des Keilzinkens kann es zu einem Ablösen des Klebstoffes und infolgedessen zu einem Versagen der Verbindung kommen. Die vorliegende Erfindung reduziert diese Nachteile.

Vorliegend bedeutet die nichtlineare Abnahme des Abstandes der Kontaktflächen des jeweiligen Montageelements insbesondere, dass sich das Montageelement in Längsrichtung, ausgehend von dem Blattlaminat verjüngt. Die Verjüngung des Montageelements ist dabei nichtlinear.

Ein solches Rotorblatt weist bevorzugt einen Wurzelbereich und eine Blattspitze auf, wobei sich das Rotorblatt in Längsrichtung (L) zwischen dem Wurzelbereich und der Blattspitze erstreckt. Ferner weist ein solches Rotorblatt bevorzugt eine im Wesentlichen in Längsrichtung verlaufende Vorderkante und eine in einer Profiltiefenrichtung (Q) des Rotorblattes beabstandete und in Längsrichtung verlaufende Hinterkante auf. Vorliegend wird unter der Profildickenrichtung (D) insbesondere keine globale Richtung des Rotorblattes verstanden, sondern lokal im Bereich jeweils eines Montageelements bzw. mehrerer benachbarter Montageelemente, jeweils vorzugsweise die Normale der Ebene verstanden, welche durch die Laminatschichtengebildet wird. Beispielsweise bei einem zylindrischen Rotorblattsegment entspricht die Profildickenrichtung (D) somit je einer Radialen des Rotorblattsegments.

Vorzugsweise sind die Mehrzahl von Montageelementen in einer Ebene (E) orthogonal zur Längsrichtung (L) benachbart zueinander angeordnet, und wobei jeweils zwischen zwei benachbarten Montageelementen ein Freiraum ausgebildet wird, in welchem ein korrespondierendes Montageelement derart aufgenommen ist, dass die Kontaktflächen des aufgenommenen Montageelements mit jeweils einer der Kontaktflächen der zwei benachbarten Montageelemente in Anlage sind. Durch eine solche Anordnung der Montageelemente können die Mehrzahl der Montageelemente insbesondere flächig Kräfte zwischen den Rotorblattsegmenten übertragen. Es ist dabei sowohl im Sinne der Erfindung, dass die Montageelemente in Profiltiefenrichtung (Q) beabstandet zueinander benachbart zueinander angeordnet sind, als auch, dass die Montageelemente in Profildickenrichtung (D) beabstandet zueinander benachbart zueinander angeordnet sind.

Die Ebene (E) wird vorliegend durch die Profiltiefenrichtung (Q) und die Profildickenrichtung (D) definiert, wobei die Längsrichtung (L) die Flächennormale der Ebene (E) ist.

Weiter bevorzugt sind die Kontaktflächen des aufgenommenen Montageelements mit je einer der in Anlage stehenden Kontaktflächen der zwei benachbarten Montageelemente stoffschlüssig verbunden, insbesondere mittels eines Klebstoffes, welcher auf die Kontaktflächen der zwei benachbarten Montageelemente und/oder die Kontaktflächen des aufgenommenen Montageelements aufgebracht ist. Eine stoffschlüssige Verbindung mittels der Kontaktflächen stellt eine flächige und somit materialgerechte bzw. faserverbundgerechte Fügung bereit. Insbesondere die Fügung mittels Klebstoff ist dabei vorteilhaft, da fertigungsbedingte und materialbedingte Form- und Lageabweichungen ausgeglichen werden können.

Gemäß einer bevorzugten Ausführungsvariante umfassen das erste und das zweite Rotorblattsegment jeweils: mindestens eine Verstärkungsstruktur zur Aufnahme von Längskräften, welche sich entlang des Rotorblattsegments in Längsrichtung (L) erstreckt, wobei die Montageelemente jeweils stirnseitig im Bereich der jeweiligen Verstärkungsstruktur angeordnet sind, und die Verstärkungsstruktur des ersten Rotorblattsegments mit der Verstärkungsstruktur des zweiten Rotorblattsegments koppeln. Solche Verstärkungsstrukturen nehmen in der Regel einen Großteil der in Längsrichtung wirkenden Kräfte auf. Durch die Kopplung der Verstärkungsstrukturen mittels der Montageelemente wird sichergestellt, dass die Kraftübertragung zwischen benachbarten Rotorblattsegmenten durch die Verstärkungsstrukturen sichergestellt wird.

Weiter bevorzugt weist die Verstärkungsstruktur mindestens eine Laminatschicht, vorzugsweise eine Mehrzahl von Laminatschichten, aus einem unidirektionalen Gelege auf, welche jeweils in Längsrichtung (L) orientiert sind, und wobei die Mehrzahl der Montageelemente integral an der Verstärkungsstruktur angeformt sind. In einem Faserverbundwerkstoff aus einem solchen unidirektionalen Gelege sind im Wesentlichen alle Fasern in eine Richtung orientiert, wobei lediglich zur Fixierung Fasern in abweichenden Richtungen verlaufen. Ein Faserverbundwerkstoff mit einem solchen unidirektionalen Gelege stellt hinsichtlich der Steifigkeit und Festigkeit eine optimale Ausnutzung der Fasereigenschaften dar. Durch die anisotropen, insbesondere orthotropen Eigenschaften der Fasern können die Normalkräfte aus den auf das Rotorblatt wirkenden Biegemomenten somit optimal aufgenommen werden und mittels der Montageelemente übertragen werden.

Gemäß einer bevorzugten Ausführungsform weisen die Montageelemente einen laminatseitigen Abschnitt und einen endseitigen Abschnitt auf, und wobei der Verlauf der Kontaktflächen in dem laminatseitigen Abschnitt und/oder dem endseitigen Abschnitt relativ zu der Längsrichtung (L) durch eine tangentiale Randbedingung definiert ist. Somit werden die Kleberspannungen in dem laminatseitigen Abschnitt und/oder dem endseitigen Abschnitt reduziert. Ferner nähern sich die Kontaktflächen der Montageelemente asymptotisch an die Faserorientierung des Blattlaminats bzw. der Verstärkungsstruktur an, sodass eine optimierte Krafteinleitung und -Übertragung erfolgt. Besonders von Vorteil ist eine solche Ausbildung der Montageelemente in Fällen, in welchen die Kontaktflächen der Montageelemente miteinander verklebt sind. Durch die material- und fertigungsgerechte Krafteinleitung werden dabei insbesondere die Kleberspannungen reduziert.

Gemäß einer bevorzugten Weiterbildung weisen die Montageelemente einen laminatseitigen Abschnitt und einen endseitigen Abschnitt auf, bzw. den vorstehend beschriebenen laminatseitigen Abschnitt und endseitigen Abschnitt auf, wobei der Abstand der Kontaktflächen zumindest abschnittsweise konstant ist. Durch einen abschnittsweise konstanten Abstand der Kontaktflächen zueinander wird die Kleberspannung in diesem Bereich reduziert und die Kopplung der jeweiligen Montageelemente des ersten Rotorblattsegments und der jeweiligen Montageelemente des zweiten Rotorblattsegments in diesem Bereich lokal entlastet. Eine parallel zu der Faserorientierung verlaufende Kontaktfläche ermöglicht darüber hinaus eine optimierte Kraftübertragung.

Es ist somit ebenfalls im Sinne der Erfindung, dass beispielsweise der laminatseitige Abschnitt zunächst einen Teilabschnitt mit konstantem Abstand der Kontaktflächen aufweist, und einen weiteren Teilabschnitt aufweist, in welchen der Abstand der Kontaktflächen durch eine tangentiale Anfangsbedingung definiert wird. So ist es beispielsweise möglich, dass ein Freiraum zwischen den Kontaktflächen von zwei benachbarten Montageelementen ausgebildet wird, welche abschnittweise parallel zueinander verlaufen, und ein Montageelement mit einem endseitigen Abschnitt, welcher durch eine tangentiale Randbedingung definiert wird, in diesen Freiraum eingebracht werden kann. Somit wird ein Toleranzbereich zwischen den parallelen Kontaktflächen bereitgestellt, sodass fertigungs- und temperaturbedingte Form- und Lageabweichungen des in dem Freiraum eingebrachten Montageelements ausgeglichen werden können.

Gemäß einer bevorzugten Weiterbildung sind die Kontaktflächen in der Profildickenrichtung (D) beabstandet zueinander, wobei sich jede der Kontaktflächen endseitig an eine Laminatschicht des Blattlaminats bzw. eine sich parallel zu den Laminatschichten erstreckende Ebene, asymptotisch annähert. Durch eine solche asymptotische Annäherung in Profildickenrichtung (D) schmiegt sich die jeweilige Kontaktfläche des Montageelements an die Faserorientierung des Blattlaminats bzw. der Verstärkungsstruktur an. Folglich wird eine material- und fertigungsgerechte Krafteinleitung in das Blattlaminat bzw. die Verstärkungsstruktur gewährleistet und die Kleberspannung, insbesondere in dem endseitigen Abschnitt, derartig reduziert, dass eine Spannungsüberhöhung an der Spitze des Montageelements verhindert wird.

Gemäß einer bevorzugten Weiterbildung sind die Kontaktflächen in der Profildickenrichtung (D) beabstandet zueinander, wobei der Abstand zumindest abschnittweise konstant ist und die Kontaktflächen abschnittsweise parallel zu den Laminatschichten des Blattlaminats und/oder der Verstärkungsstruktur verlaufen. Ein solcher laminatseitiger bzw. endseitiger Abschnitt der Montageelemente, in welchen der Abstand der Kontaktflächen konstant ist, bietet die zuvor genannten Vorteile, insbesondere eine fertigungs- und materialgerechten Krafteinleitung, und ist zugleich in einfacher Weise fertigbar.

Vorzugsweise weisen der laminatseitige Abschnitt eine Längserstreckung L₁ und der endseitige Abschnitt eine Längserstreckung L₂ auf, und wobei Längserstreckung L₁ größer ist als die Längserstreckung L₂, und angrenzend an den laminatseitigen Abschnitt ein Toleranzbereich ausgebildet wird.

Weiter bevorzugt weist der Toleranzbereich eine Längserstreckung auf, welche durch die Differenz L₁ - L₂ definiert wird, und eine Breite b auf, wobei die Differenz L₁ - L₂ ≥ 3b ist. Somit ist in dem Freiraum, welcher durch zwei benachbarte Montageelemente ausgebildet wird, in Längsrichtung (L) ein Toleranzbereich bereitgestellt, sodass fertigungsbedingte und materialbedingte Form- und Lageabweichungen in Längsrichtung (L) toleriert werden und eine Schädigung des Blattlaminats des angrenzenden Blattlaminats und der Montageelemente verhindert wird.

Weiter bevorzugt weist das Montageelement eine Längserstreckung L₃ auf, wobei das Verhältnis des maximalen Abstandes (h) der Kontaktflächen zu der Längserstreckung L₃ ≥ 5h ist. Somit wird eine ausreichend große Längserstreckung des Montageelements bereitgestellt und damit eine sanfte Reduzierung des Abstandes der Kontaktflächen gewährleistet, um Spannungsüberhöhungen zu reduzieren bzw. zu vermeiden.

Vorzugsweise ist die Längserstreckung L₃ eine erste Längserstreckung L_{3.1} mindestens eines ersten Montageelements, und das erste und das zweite Rotorblattsegment umfassen ferner jeweils mindestens ein zweites Montageelement mit einer zweiten Längserstreckung L_{3.2}, , welche größer ist als die Längserstreckung L_{3.1}. Somit weisen die Montageelemente bevorzugt in einem ersten Bereich, insbesondere im Bereich einer ersten Verstärkungsstruktur eine erste Längserstreckung L_{3.1} auf und im Bereich einer zweiten Verstärkungsstruktur eine zweite Längserstreckung L_{3.2} auf, wobei die erste Längserstreckung L_{3.1} größer ist, als die zweite Längserstreckung L_{3.2}. Somit werden die Kräfte durch die Montageelemente in Längsrichtung versetzt zueinander eingeleitet, sodass Spannungsspritzen vermieden bzw. reduziert werden.

Vorzugsweise ist die Mehrzahl von Montageelementen in Längsrichtung versetzt bzw. beabstandet zueinander angeordnet. Somit erfolgt die Krafteinleitung in Längsrichtung versetzt zueinander, sodass Spannungsspitzen vermieden bzw. reduziert werden.

Vorzugsweise ist der minimale Abstand (b) der Kontaktflächen von zwei benachbarten Montageelementen ≥ 1 mm. Somit sind die Montageelemente noch mit herkömmlichen Fertigungsverfahren, wie dem Wasserstrahlschneiden, in einfacher Weise fertigbar. Ferner ermöglicht ein Abstand von 1 mm noch einen ausreichenden Spalt beispielsweise zum Austragen von Klebstoff.

Gemäß einem bevorzugten Ausführungsbeispiel umfasst die Verstärkungsstruktur einen Holmgurt und/oder eine Nasenkantenverstärkung und/oder eine Hinterkantenverstärkung.

Die Erfindung wird in einem ersten Aspekt, wie vorstehend beschrieben, durch ein Rotorblatt gelöst. Beschrieben wird ferner ein Rotorblattsegment für ein solches Rotorblatt einer Windenergieanlage. Das Rotorblattsegment ist ausgebildet mit einer Stirnseite, wobei das Rotorblattsegment in Längsrichtung stirnseitig mit einem benachbarten Rotorblattsegment koppelbar ist, einem Blattlaminat mit einer Mehrzahl von Laminatschichten, welche in einer Profildickenrichtung (D) gestapelt sind, und einer Mehrzahl von stirnseitig angeordneten Montageelementen, welche zum Koppeln des ersten Rotorblattsegments mit dem zweiten Rotorblattsegment mit einer Mehrzahl korrespondierender Montageelemente des benachbarten Rotorblattsegments in Eingriff bringbar sind, wobei jedes der Montageelemente sich in Längsrichtung erstreckt und zwei Kontaktflächen aufweist, welche quer zur Längsrichtung (L) in einem Abstand zueinander angeordnet sind, der endseitig nichtlinear abnimmt.

Bevorzugte Ausführungsformen und Vorteile des erfindungsgemäßen Rotorblattes sind zugleich bevorzugte Beispiele und Vorteile des Rotorblattsegments für ein solches Rotorblatt.

Gemäß einem zweiten Aspekt der Erfindung wird die eingangs genannte Aufgabe durch eine Windenergieanlage mit mindestens einem Rotorblatt gemäß dem ersten Aspekt der Erfindung gelöst. Die bevorzugten Ausführungsformen und Vorteile des erfindungsgemäßen Rotorblattes sind zugleich bevorzugte Ausführungsformen und Vorteile einer Windenergieanlage mit einem solchen Rotorblatt.

Gemäß einem weiteren Aspekt der vorliegenden Erfindung wird die eingangs genannte Aufgabe gelöst durch ein Verfahren zum Herstellen eines Rotorblattes gemäß dem ersten Aspekt der Erfindung für eine Windenergieanlage, umfassend die Schritte: Bereitstellen eines ersten Rotorblattsegments wie zuvor beschrieben, Bereitstellen mindestens eines zweiten Rotorblattsegments wie zuvor beschrieben, und In-Eingriff-Bringen der Mehrzahl von stirnseitig angeordneten Montageelementen des ersten Rotorblattsegments mit den korrespondieren Montageelementen des zweiten Rotorblattsegments. Durch das Bereitstellen eines ersten Rotorblattsegments und eines zweiten Rotorblattsegments wie zuvor beschrieben wird ein Verfahren zum Herstellen eines segmentierten Rotorblattes angegeben, welches eine sichere und leichte Verbindung der Rotorblattsegmente miteinander ermöglicht.

Das erfindungsgemäße Verfahren und seine möglichen Fortbildungen weisen Merkmale bzw. Verfahrensschritte auf, die sie insbesondere dafür geeignet machen, für ein Rotorblatt bzw. Rotorblattsegment gemäß den in den vorherigen Aspekten und ihren jeweiligen Fortbildungen verwendet zu werden. Für weitere Vorteile, Ausführungsvarianten und Ausführungsdetails dieser weiteren Aspekte und ihrer möglichen Fortbildungen wird auf die zuvor erfolgte Beschreibung zu den entsprechenden Merkmalen und Fortbildungen des Rotorblattsegment Rotorblattsegments und des Rotorblattes verwiesen.

Gemäß einer bevorzugten Fortbildung ist die Mehrzahl von Montageelementen in einer Ebene (E) orthogonal zur Längsrichtung (L) benachbart zueinander angeordnet, wobei jeweils zwischen zwei benachbarten Montageelementen ein Freiraum ausgebildet wird, und wobei der Schritt des In-Eingriff-Bringens ferner umfasst: Aufnehmen jeweils eines der korrespondierenden Montageelemente in jedem der Freiräume, sodass die Kontaktflächen jedes aufgenommenen Montageelements jeweils mit einer der Kontaktflächen der zwei benachbarten Montageelemente in Anlage sind. Durch eine solche Anordnung der Montageelemente können die Mehrzahl der Montageelemente insbesondere flächig und somit materialgerecht Kräfte in das Blattlaminat bzw. die Verstärkungsstruktur des jeweiligen Rotorblattsegments einleiten. Die Kraftübertragung erfolgt somit weitestgehend parallel zu der Faserorientierung der Laminatlagen des Blattlaminats bzw. der Verstärkungsstruktur. Durch die in Anlage stehenden Kontaktflächen der zwei benachbarten Montageelemente eines ersten Rotorblattsegments und des korrespondierenden Montageelements des zweiten Rotorblattsegments wird eine kompakte Verbindung des ersten Rotorblattsegments mit dem zweiten Rotorblattsegment gewährleistet. Von außen ist die Verbindung der Rotorblattsegmente somit nicht ersichtlich, da je ein Montageelement des zweiten Rotorblattsegments vollständig in den Freiraum eingebracht ist. In gleicher Weise ist dabei ebenso ein Montageelement des ersten Rotorblattsegments in je einem Freiraum eines zweiten Rotorblattsegments vollständig aufgenommen.

Weiter bevorzugt umfasst das Verfahren vor dem Schritt des In-Eingriff-Bringens ferner den Schritt: Aufbringen eines Klebstoffes auf jede der Kontaktflächen des ersten und/oder zweiten Rotorblattsegments. Insbesondere die Verklebung der Montageelemente miteinander ermöglicht dabei eine sichere und materialgerechte Verbindung bzw. Fügung der Montageelemente und damit der Rotorblattsegmente.

Bevorzugte Ausführungsbeispiele werden beispielhaft anhand der beiliegenden Figuren erläutert. Es zeigen:
- Fig. 1:: eine schematische, dreidimensionale Ansicht einer beispielhaften Ausführungsform einer Windenergieanlage;
- Fig. 2:: eine schematische, dreidimensionale Ansicht eines Ausschnitts eines Rotorblatts der Windenergieanlage gemäß Fig. 1;
- Fig. 3:: eine schematische, zweidimensionale Seitenansicht eines Rotorblattsegments eines Rotorblattes gemäß Fig. 2;
- Fig. 4:: eine schematische, dreidimensionale Ansicht eines Rotorblattsegments gemäß einem ersten bevorzugten Ausführungsbeispiel;
- Fig. 5:: eine schematische, dreidimensionale Ansicht eines Rotorblattsegments gemäß einem zweiten bevorzugten Ausführungsbeispiel;
- Fig. 6:: eine schematische zweidimensionale Ansicht einer Mehrzahl von Montageelementen gemäß einer ersten Ausführungsform für ein Rotorblattsegment gemäß Figur 4;
- Fig. 7:: eine schematische zweidimensionale Ansicht einer Mehrzahl von Montageelementen gemäß einer zweiten Ausführungsform für ein Rotorblattsegment gemäß Figur 4;
- Fig. 8:: eine schematische zweidimensionale Ansicht einer Mehrzahl von Montageelementen gemäß der ersten Ausführungsform, welche im Bereich einer Verstärkungsstruktur des Rotorblattsegments gemäß Figur 4 angeordnet sind;
- Fig. 9:: eine schematische zweidimensionale Ansicht einer Mehrzahl von Montageelementen gemäß einer dritten Ausführungsform, welche im Bereich einer Verstärkungsstruktur des Rotorblattsegments gemäß Figur 4 angeordnet sind;
- Fig. 10:: eine schematische zweidimensionale Ansicht einer Mehrzahl von Montageelementen gemäß einer ersten Ausführungsform für ein Rotorblattsegment gemäß Figur 5;
- Fig. 11:: eine schematische zweidimensionale Ansicht einer Mehrzahl von Montageelementen gemäß einer zweiten Ausführungsform für ein Rotorblattsegment gemäß Figur 5;
- Fig. 12:: eine schematische zweidimensionale Ansicht einer Mehrzahl von Montageelementen gemäß der ersten Ausführungsform, welche im Bereich einer Verstärkungsstruktur des Rotorblattsegments gemäß Figur 5 angeordnet sind;
- Fig. 13:: eine schematische zweidimensionale Ansicht einer Mehrzahl von Montageelementen gemäß einer dritten Ausführungsform, welche im Bereich einer Verstärkungsstruktur des Rotorblattsegments gemäß Figur 5 angeordnet sind,
- Fig. 14:: eine schematische zweidimensionale Ansicht einer Mehrzahl von Laminatschichten eines Rotorblattsegments gemäß Figur 3 oder 4.

In den Figuren sind gleiche oder im Wesentlichen funktionsgleiche bzw. -ähnliche Elemente mit den gleichen Bezugszeichen bezeichnet.

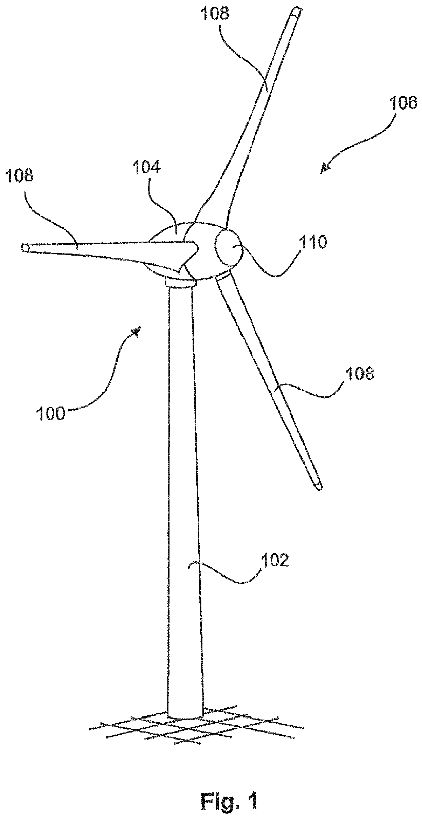

Figur 1 zeigt eine schematische, dreidimensionale Ansicht einer beispielhaften Ausführungsform einer Windenergieanlage 100. Figur 1 zeigt insbesondere eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

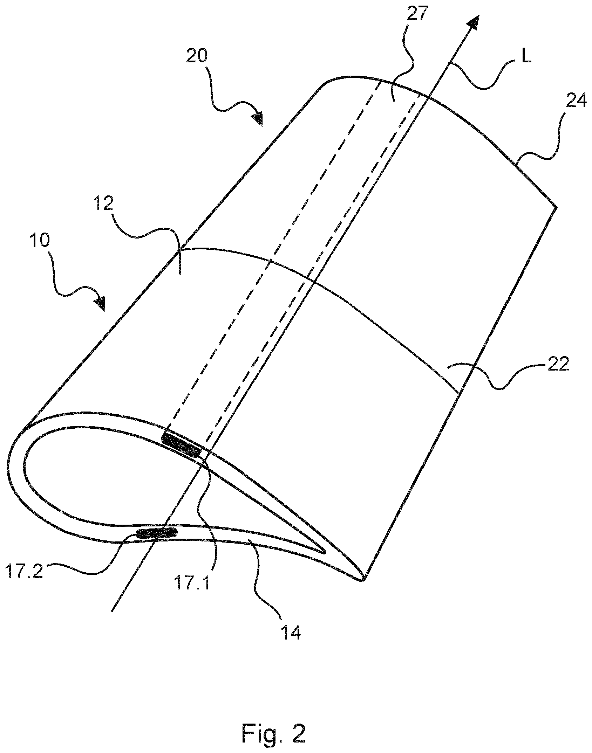

Mindestens eines der Rotorblätter 108 des Rotors 106 kann dabei als zweiteiliges oder mehrteiliges Rotorblatt mit mindestens zwei Rotorblattsegmenten 10, 20 (vgl. Figur 2) ausgebildet sein.

Figur 2 zeigt ein erstes Rotorblattsegment 10 mit einer ersten Stirnseite 12 und ein zweites Rotorblattsegment 20 mit einer zweiten Stirnseite 22. Das erste Rotorblattsegment 10 und das zweite Rotorblattsegment 20 sind stirnseitig in Längsrichtung (L) miteinander gekoppelt.

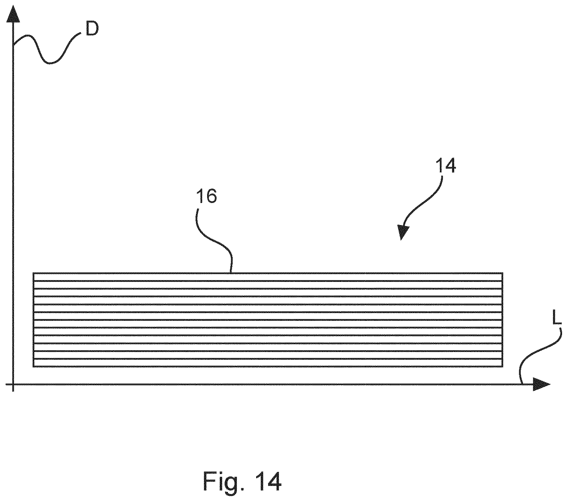

Das erste Rotorblattsegment 10 umfasst ein Blattlaminat 14 mit einer Mehrzahl von Laminatschichten 16 (vgl. Figur 14). Das Rotorblatt 10 umfasst ferner eine erste Verstärkungsstruktur 17.1, welche auf der Saugseite 11.1 des Rotorblattsegments 10, angeordnet ist und eine zweite Verstärkungsstruktur 17.2, welche auf der Druckseite 11.2 angeordnet ist. Die Verstärkungsstruktur 17.1, 17.2 erstrecken sich in Längsrichtung (L).

Das zweite Rotorblattsegment 20 umfasst ein Blattlaminat 24 mit einer Mehrzahl von Laminatschichten (nicht gezeigt) und eine Verstärkungsstruktur 27, welche sich in Längsrichtung (L) erstreckt. Der Aufbau des zweiten Rotorblattsegments 20 entspricht ferner dem Aufbau des ersten Rotorblattsegments 10.

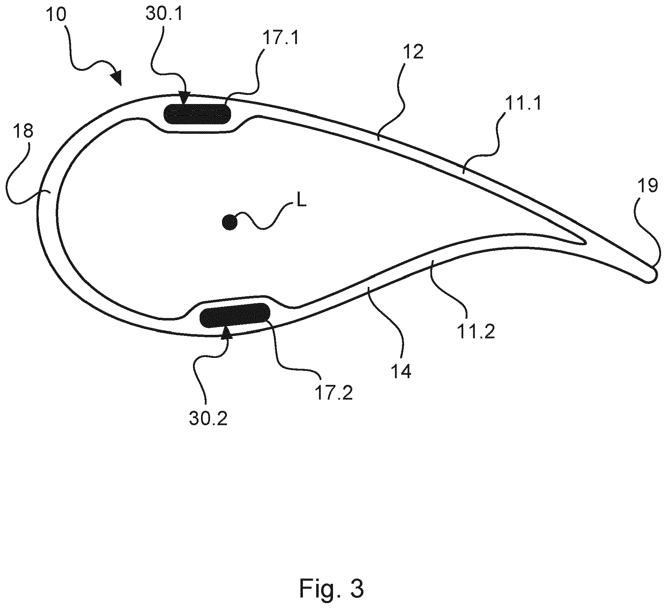

Figur 3 zeigt das stirnseitige Ende 12 des ersten Rotorblattsegments 10 in einer Seitenansicht.

Das Rotorblattsegment 10 hat eine Vorderkante 18 und eine Hinterkante 19, welche quer zur Längsrichtung (L) beabstandet zueinander angeordnet sind.

Die Verstärkungsstruktur 17.1, 17.2 ist dabei in das Blattlaminat 14 eingebettet und verläuft in Längsrichtung (L). Die Verstärkungsstruktur 17.1, 17.2 umfasst bevorzugt ein unidirektionales Gelege, dessen Fasern in Längsrichtung (L) orientiert sind. An der Stirnseite 12 sind bevorzugt im Bereich der Verstärkungsstruktur 17.1, 17.2 eine Mehrzahl von Montageelementen 30.1, 30.2 angeordnet.

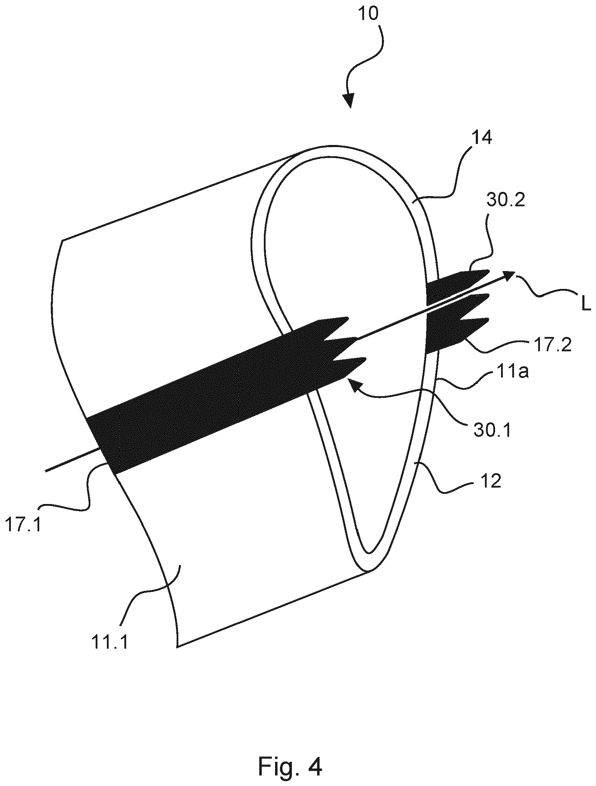

Wie insbesondere die dreidimensionale Ansicht des Rotorblattsegments 10 gemäß Figur 4 zeigt, erstrecken sich die Mehrzahl der Montageelemente 30.1, 30.2 in Längsrichtung (L). Die Montageelemente 30.1, 30.2 sind dabei im Bereich der Verstärkungsstruktur 17.1, 17.2 des Rotorblattsegments an dem stirnseitige Ende 12 angeordnet.

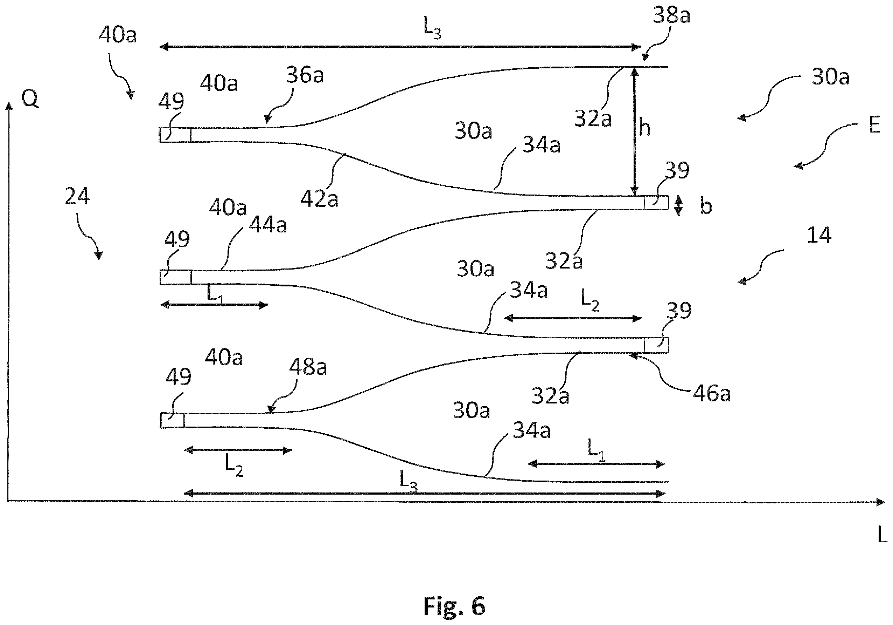

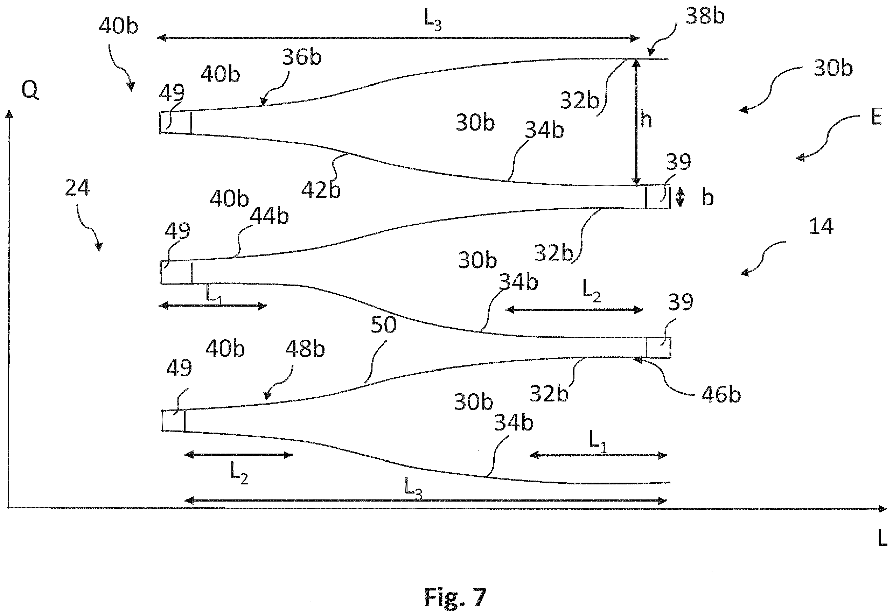

Gemäß dem in Figur 4 gezeigten bevorzugten Ausführungsbeispiel sind die Montageelemente 30.1 an der ersten Verstärkungsstruktur 17.1 und die Montageelemente 30.2 an der zweiten Verstärkungsstruktur 17. 2 und in Profiltiefenrichtung (Q) (vgl. Figur 6 und 7) beabstandet zueinander angeordnet.

Diese Montageelemente 30.1, 30.2 sind dazu eingerichtet, mit korrespondierenden Montageelementen 40 (vgl. Figuren 6 bis 9) des zweiten Rotorblattsegments 20 (vgl. Figur 2) gekoppelt zu sein.

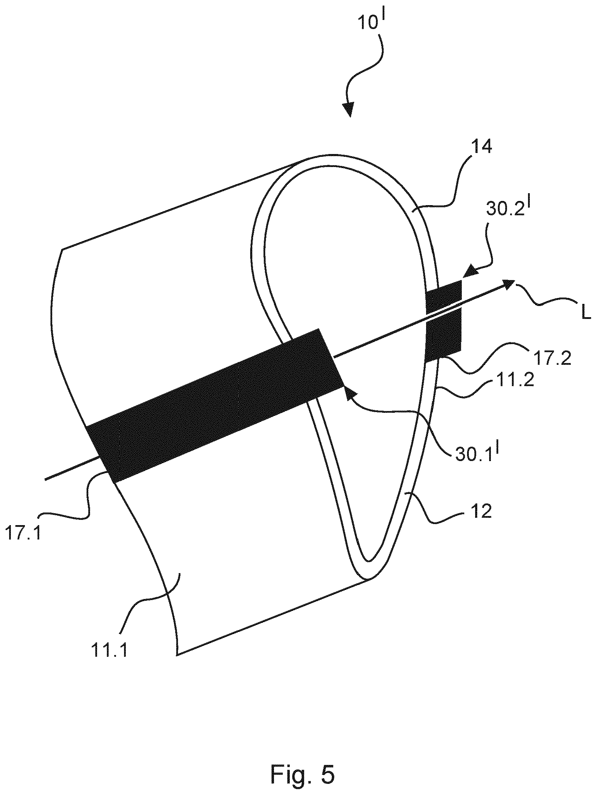

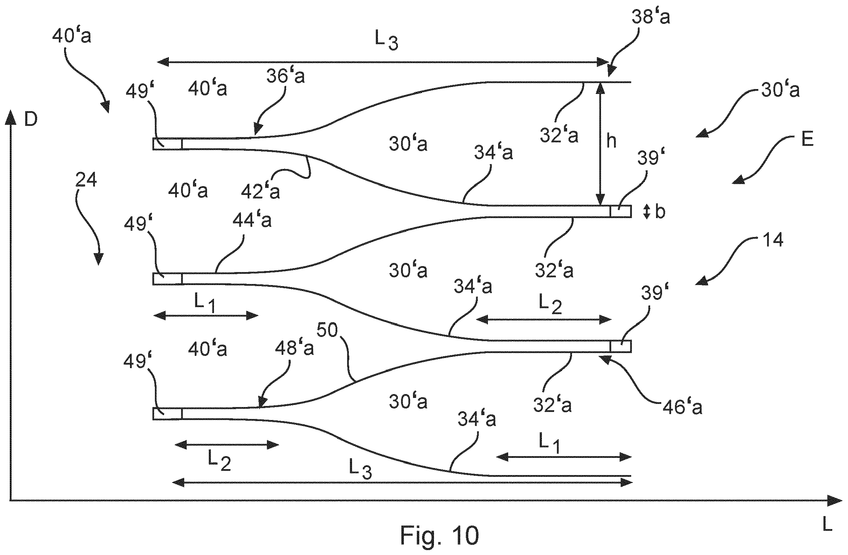

Das in Figur 5 gezeigte Ausführungsbeispiel eines Rotorblattsegments 10' unterscheidet sich von dem in Figur 4 gezeigten Ausführungsbeispiel dadurch, dass die Montageelemente 30.1' und 30.2' in Profildickenrichtung (D) benachbart zueinander angeordnet sind (vgl. Figur 10 bis 13). Die Montageelemente 30.1' sind im Bereich der Verstärkungsstruktur 17.1 an der Stirnseite 12 angeordnet und erstrecken sich in Längsrichtung (L). Die Montageelemente 30.2' sind im Bereich der Verstärkungsstruktur 17.2 an der Stirnseite 12 angeordnet und erstrecken sich in Längsrichtung (L).

Figur 6 bis 9 zeigen Ausführungsbeispiele der Montageelemente 30a, 30b, 30c, wobei die Montageelemente 30a, 30b, 30c in einer Ebene (E), insbesondere in Profiltiefenrichtung (Q) beabstandet voneinander sind.

Wie die Detaildarstellung gemäß Figur 6 zeigt, sind die Montageelemente 30a derart ausgebildet, dass jeweils zwischen zwei benachbarten Montageelementen 30a ein Freiraum ausgebildet wird, in den ein korrespondierendes Montageelement 40a des zweiten Rotorblattsegments 20 (vgl. Figur 2) aufgenommen ist.

Die Montageelemente 40a weisen jeweils eine gemäß der vorliegenden schematischen Darstellung in Profiltiefenrichtung (Q) nach oben zeigende Kontaktfläche 42a und eine nach unten zeigende Kontaktfläche 44a auf.

Jedes der Montageelemente 40a ist dabei derart in dem Freiraum der benachbarten Montageelemente 30a aufgenommen, dass die Kontaktflächen 42a, 44a mit jeweils einer der Kontaktflächen 32a, 34a der zwei benachbarten Montageelemente 30a in Anlage sind.

Auf die Kontaktflächen 32a, 34a der Montageelemente 30a und/oder die Kontaktflächen 42a, 44a der Montageelemente 40a ist ein Klebstoff 50 aufgebracht, welcher die Montageelemente 30a des ersten Rotorblattsegments 10 (vgl. Figur 1) mit den Montageelementen 40a des zweiten Rotorblattsegments 20 (vgl. Figur 2) fügt.

Die Montageelemente 30a, 40a sind dabei stirnseitig am Blattlaminat 14, 24 insbesondere integral, ausgebildet, sodass die Faserorientierung der Schichten des Blattlaminats der Faserorientierung der Schichten der Montageelemente 30a, 40a entspricht und umgekehrt. Alternativ können die Montageelemente 30a, 40a integral an den Verstärkungsstrukturen 17.1, 17.2 (vgl. Figur 4, 5) ausgebildet sein.

Die Montageelemente 30a weisen jeweils einen endseitigen Abschnitt 36a auf, in welchem der Abstand der Kontaktflächen 32a, 34a konstant ist.

Die Montageelemente 30a weisen ferner jeweils einen laminatseitigen Abschnitt auf, in welchem der Abstand der Kontaktflächen 32a, 34a konstant ist. Somit verlaufen die Kontaktflächen 32a, 34a zumindest abschnittsweise parallel zu der Faserorientierung des Blattlaminats 14 (vgl. Figur 2) bzw. der Verstärkungsstruktur 17 (vgl. Figur 4).

Der Abstand der Kontaktflächen 42a, 44a in Profiltiefenrichtung (Q) der Montageelemente 40a verläuft entsprechend dem Verlauf der Kontaktflächen 32a, 34a.

Der minimale Abstand jeweils zwei der Kontaktflächen 32a, 34a sowie 42a, 44a wird durch den Abstand (b) definiert. Der maximale Abstand jeweils zwei der Kontaktflächen 32a, 34a sowie 42a, 44a wird durch den Abstand (h) definiert.

Die schematische Detailansicht gemäß Figur 7 zeigt ein weiteres Ausführungsbeispiel der erfindungsgemäßen Montageelemente 30b, 40b.

Das gezeigte Ausführungsbeispiel unterscheidet sich von den in Figur 6 gezeigten Ausführungsbeispiel dadurch, dass der jeweilige Abstand der Kontaktflächen 32b, 34b in Profiltiefenrichtung (Q) der Montageelemente 30b endseitig derart abnimmt, dass sich jede der Kontaktflächen 32b, 34b in dem endseitigen Abschnitt 36b an eine Laminatschicht 16 (vgl. Figur14) des Blattlaminats 14 (vgl. Figur 2) bzw., eine sich parallel zu den Laminatschichten erstreckende Ebene asymptotisch in Profiltiefenrichtung (Q) annähert. Ferner nimmt der Abstand der Kontaktflächen in Profiltiefenrichtung (Q) laminatseitig derart zu, dass sich jede der Kontaktflächen 32b, 34b in dem laminatseitigen Abschnitt 38b an die Faserorientierung des Blattlaminats 14 bzw. der Verstärkungsstruktur 17 (vgl. Figur 2) asymptotisch in Profiltiefenrichtung (Q) annähert.

Der Abstand der Kontaktflächen 42b, 44b in Profiltiefenrichtung (Q) der Montageelemente 40a verläuft entsprechend dem Verlauf der Kontaktflächen 32b, 34b.

Wie aus Figur 6, 7, 8 und 9 ersichtlich, wird der minimale Abstand jeweils zwei der Kontaktflächen 32a, b, c und 34 a, b, c sowie 42a, b, c und 44a, b, c wird durch den Abstand (b) definiert. Der maximale Abstand jeweils zwei der Kontaktflächen 32a, b, c und 34a, b, c sowie 42a, b, c und 44a, b, c wird durch den Abstand (h) definiert.

Ferner wird aus den Figur 6, 7 und 8 ersichtlich, dass der laminatseitige Abschnitt 38a, b eine Längserstreckung L₁ und der endseitige Abschnitt 36a, b eine Längserstreckung L₂ aufweist, wobei die Längserstreckung L₁ größer ist als die Längserstreckung L₂.

Ferner weist der laminatseitige Abschnitt 48a, 48b eine Längserstreckung L₁ auf und der endseitige Abschnitt 46a, 46b eine Längserstreckung L₂ auf, wobei die Längserstreckung L₁ größer ist als die Längserstreckung L₂.

Somit wird, wie in Figur 6 und 7 ersichtlich, jeweils ein Toleranzbereich 39, 49 ausgebildet wird, durch welchen materialbedingte und fertigungsbedingte Form- und Lageabweichungen ausgeglichen werden.

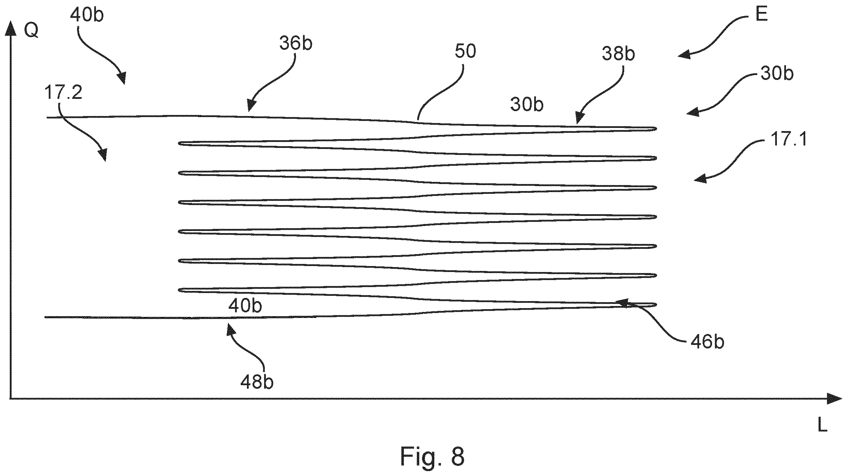

Gemäß dem in Figur 8 gezeigten Ausführungsbeispiel sind die Montageelemente 30b, 40b integral an der Verstärkungsstruktur 17.1, 17.2 ausgebildet und der endseitigen Abschnitt 36a, 46a verläuft derart sanft in den laminatseitigen Abschnitt 38a, 48a über, dass die Kleberspannungen des Klebstoffes 50 reduziert werden. Die Ausgestaltung des Ausführungsbeispiels entspricht ansonsten dem in Figur 7 gezeigten Ausführungsbeispiel.

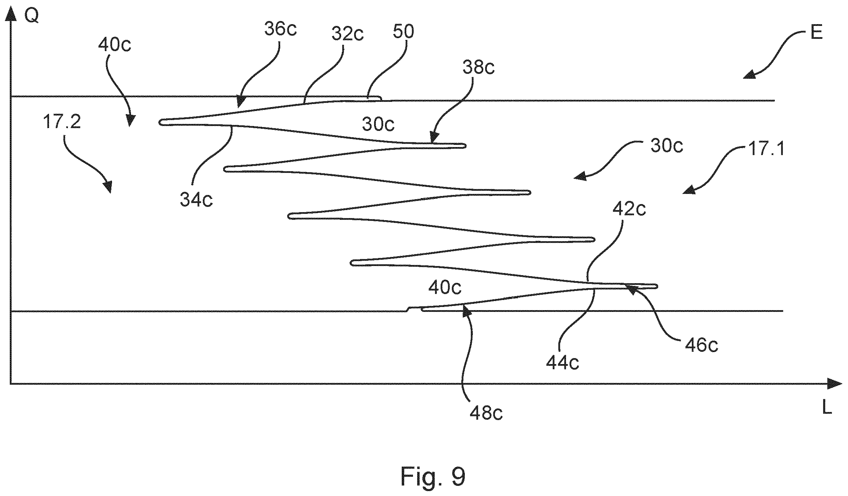

Das in Figur 9 gezeigte Ausführungsbeispiel der Montageelemente 30c, 40c unterscheidet sich von dem in Figur 8 gezeigten Ausführungsbeispiel dadurch, dass die Montageelemente 30, 40 sowohl in Profiltiefenrichtung (Q) beabstandet bzw. benachbart zueinander angeordnet sind, als auch in Längsrichtung (L) versetzt zueinander angeordnet sind. Die Montageelemente 30c weisen dabei eine gemäß der Darstellung in Figur 9 in Profiltiefenrichtung (Q) nach oben zeigende Kontaktfläche 32c auf, und ferner eine zweite in Profiltiefenrichtung (Q) nach unten zeigende Kontaktfläche 34c auf, wobei die obere Kontaktfläche 32c kürzer ist, als die untere Kontaktfläche 34c.

Ferner weisen auch die zweiten Montageelemente 40c jeweils eine gemäß der Darstellung in Figur 9 in Profiltiefenrichtung (Q) nach oben zeigende Kontaktfläche 42c auf, und ferner eine zweite in Profiltiefenrichtung (Q) nach unten zeigende Kontaktfläche 44c auf, wobei die obere Kontaktfläche 42c Länge ist, als die untere Kontaktfläche 44c.

Durch die asymmetrische Ausbildung der Montageelemente 30c, 40c, sind diese in Längsrichtung (L) versetzt zueinander angeordnet, sodass sich Spannungen entlang der Längsrichtung (L) verteilen und Spannungsspitzen vermieden werden.

Die Figuren 10 bis 13 zeigen Ausführungsbeispiele der Montageelemente 30'a, 30'b, 30'c, wobei die Montageelemente 30'a, 30'b, 30'c in einer Ebene (E), insbesondere in Profildickenrichtung (D) beabstandet voneinander sind.

Wie die Detaildarstellung gemäß Figur 10 zeigt, sind die Montageelemente 30`a derart ausgebildet, dass jeweils zwischen zwei benachbarten Montageelementen 30`a ein Freiraum ausgebildet wird, in den ein korrespondierendes Montageelement 40`a des zweiten Rotorblattsegments 20 (vgl. Figur 2) aufgenommen ist.

Die Montageelemente 40`a weisen jeweils eine gemäß der vorliegenden schematischen Darstellung in Profildickenrichtung (D) nach oben zeigende Kontaktfläche 42'a und eine nach unten zeigende Kontaktfläche 44`a auf.

Jedes der Montageelemente 40`a ist dabei derart in dem Freiraum der benachbarten Montageelemente 30`a aufgenommen, dass die Kontaktflächen 42`a, 44`a mit jeweils einer der Kontaktflächen 32`a, 34`a der zwei benachbarten Montageelemente 30`a in Anlage sind.

Auf die Kontaktflächen 32`a, 34'a der Montageelemente 30`a und/oder die Kontaktflächen 42`a, 44`a der Montageelemente 40`a ist ein Klebstoff 50 aufgebracht, welcher die Montageelemente 30`a des ersten Rotorblattsegments 10 (vgl. Figur 1) mit den Montageelementen 40`a des zweiten Rotorblattsegments 20 (vgl. Figur 2) fügt.

Die Montageelemente 30'a, 40`a sind dabei stirnseitig am Blattlaminat 14, 24 insbesondere integral, ausgebildet, sodass die Faserorientierung der Schichten des Blattlaminats der Faserorientierung der Schichten der Montageelemente 30'a, 40'a entspricht und umgekehrt. Alternativ können die Montageelemente 30'a, 40`a integral an den Verstärkungsstrukturen 17.1, 17.2 (vgl. Figur 4, 5) ausgebildet sein.

Die Montageelemente 30'a weisen jeweils einen endseitigen Abschnitt 36'a auf, in welchem der Abstand der Kontaktflächen 32`a, 34`a konstant ist.

Die Montageelemente 30'a weisen ferner jeweils einen laminatseitigen Abschnitt 38'a auf, in welchem der Abstand der Kontaktflächen 32`a, 34`a konstant ist.

Der Abstand der Kontaktflächen 42`a, 44`a in Profildickenrichtung (D) der Montageelemente 40`a verläuft entsprechend dem Verlauf der Kontaktflächen 32`a, 34`a.

Somit verlaufen die Kontaktflächen 32`a, 34`a zumindest abschnittsweise parallel zu den Laminatschichten 16 (vgl. Figur 14) des Blattlaminats 14 (vgl. Figur 2).

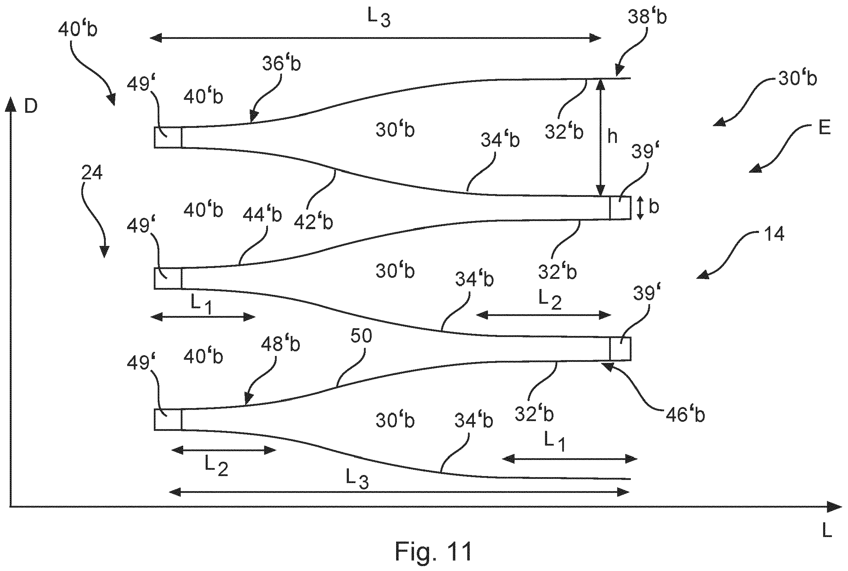

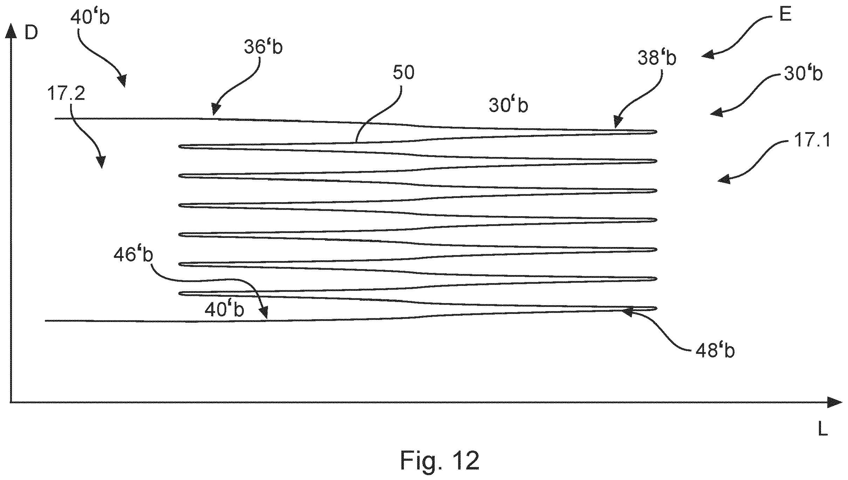

Die schematische Detailansicht gemäß Figur 11 und 12 zeigt ein weiteres Ausführungsbeispiel der erfindungsgemäßen Montageelemente 30`b, 40`b.

Das gezeigte Ausführungsbeispiel unterscheidet sich von den in Figur 10 gezeigten Ausführungsbeispiel dadurch, dass der jeweilige Abstand der Kontaktflächen 32'b, 34'b in Profildickenrichtung (D) der Montageelemente 30'b endseitig derart ab nimmt, dass sich jede der Kontaktflächen 32'b, 34'b in dem endseitigen Abschnitt 36'b an eine Laminatschicht 16 (vgl. Figur14) des Blattlaminats 14 (vgl. Figur 2) bzw., eine sich parallel zu den Laminatschichten erstreckende Ebene asymptotisch in Profildickenrichtung (D) annähert. Ferner nimmt der Abstand der Kontaktflächen in Profildickenrichtung (D) laminatseitig derart zu, dass sich jede der Kontaktflächen 32`b, 34'b in dem laminatseitigen Abschnitt 38'b an eine Laminatschicht 16 (vgl. Figur 14) des Blattlaminats 14 (vgl. Figur 2) bzw. einer sich parallel zu den Laminatschichten erstreckende Ebene asymptotisch in Profildickenrichtung (D) annähert.

Der Abstand der Kontaktflächen 42'b, 44`b in Profildickenrichtung (D) der Montageelemente 40`a verläuft entsprechend dem Verlauf der Kontaktflächen 32`b, 34`b.

Wie aus Figur 10, 11, 12 und 13 ersichtlich, wird der minimale Abstand jeweils zwei der Kontaktflächen 32`a, b, c und 34'a, b, c sowie 42`a, b, c und 44'a, b, c wird durch den Abstand (b) definiert. Der maximale Abstand jeweils zwei der Kontaktflächen 32a, b, c und 34`a, b, c sowie 42`a, b, c und 44`a, b, c wird durch den Abstand (h) definiert.

Ferner wir aus Figur 10, 11 und 12 ersichtlich, dass der laminatseitige Abschnitt 38'a, 38`b eine Längserstreckung L₁ und der endseitige Abschnitt 36'a, 36`b eine Längserstreckung l_₂ aufweist, wobei die Längserstreckung L₁ größer ist als die Längserstreckung L₂.

Ferner weist der laminatseitige Abschnitt 48'a, 48`b eine Längserstreckung L₁ auf und der endseitige Abschnitt 46'a, 46'b eine Längserstreckung L₂ auf, wobei die Längserstreckung L₁ größer ist als die Längserstreckung L₂.

Somit wird, wie in Figur 10 und 11 ersichtlich, jeweils ein Toleranzbereich 39', 49' ausgebildet wird, durch welchen materialbedingte und fertigungsbedingte Form- und Lageabweichungen ausgeglichen werden.

Gemäß dem in Figur 12 gezeigten Ausführungsbeispiel sind die Montageelemente 30`b, 40`b integral an der Verstärkungsstruktur 17.1, 17.2 ausgebildet und der endseitigen Abschnitt 36'a, 46`a verläuft derart sanft in den laminatseitigen Abschnitt 38`a, 48`a über, dass die Kleberspannungen des Klebstoffes 50 reduziert werden. Die Ausgestaltung des Ausführungsbeispiels entspricht ansonsten dem in Figur 11 gezeigten Ausführungsbeispiel.

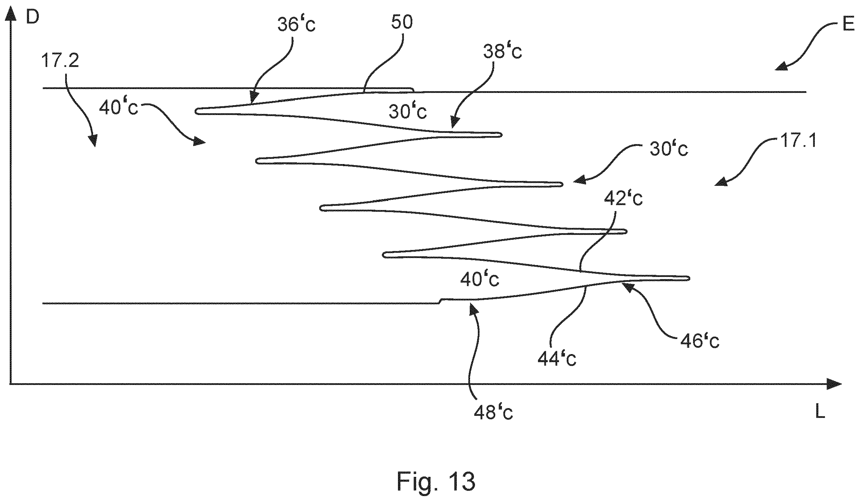

Das in Figur 13 gezeigte Ausführungsbeispiel der Montageelemente 30`c, 40'c unterscheidet sich von dem in Figur 12 gezeigten Ausführungsbeispiel dadurch, dass die Montageelemente 30`c, 40`c sowohl in Profildickenrichtung (D) beabstandet bzw. benachbart zueinander angeordnet sind, als auch in Längsrichtung (L) versetzt zueinander angeordnet sind. Die Montageelemente 30'c weisen dabei eine gemäß der Darstellung in Figur 13 in Profildickenrichtung (D) nach oben zeigende Kontaktfläche 32'c auf, und ferner eine zweite in Profildickenrichtung (D) nach unten zeigende Kontaktfläche 34'c auf, wobei die obere Kontaktfläche 32'c kürzer ist, als die untere Kontaktfläche 34`c.

Ferner weisen auch die zweiten Montageelemente 40'c jeweils eine gemäß der Darstellung in Figur 13 in Profildickenrichtung (D) nach oben zeigende Kontaktfläche 42'c auf, und ferner eine zweite in Profildickenrichtung (D) nach unten zeigende Kontaktfläche 44'c auf, wobei die obere Kontaktfläche 42'c Länge ist, als die untere Kontaktfläche 44`c.

Durch die asymmetrische Ausbildung der Montageelemente 30'c, 40'c, sind diese in Längsrichtung (L) versetzt zueinander angeordnet, sodass sich Spannungen entlang der Längsrichtung (L) verteilen und Spannungsspitzen vermieden werden.

Figur 14 zeigt einen Ausschnitt des Blattlaminats 14 in einer schematischen Ansicht. Gemäß dieser Ansicht wird deutlich, dass die Laminatschichten 16 im Wesentlichen parallel zueinander in die Profildickenrichtung (D) gestapelt sind und in einer Ebene angeordnet sind, welche im Wesentlichen parallel zur Längsrichtung (L) verläuft. Die Laminatschichten 16 sind bevorzugt aus einem Faserverbundwerkstoff ausgebildet, wobei aufgrund von Ondulationen, beispielsweise in gewebeverstärkten Faserverbundwerkstoffen Ondulationen entstehen.

Im Sinne der Erfindung, wird unter einer Laminatschicht eine Schicht verstanden, welche sich im Wesentlichen parallel zur Längsrichtung (L) erstreckt, wobei Ondulationen in der Laminatschicht durch die Gewebestruktur im Rahmen des Toleranzbereiches liegen.

Ein solcher Schichtaufbau bestehend aus in Profildickenrichtung (D) gestapelten Laminatschichten ist gleichermaßen im Bereich der Verstärkungsstruktur 17 (vgl. Figur 3 und 4) gegeben, wobei die Laminatschichten aus einem unidirektionalen Gelege gebildet werden, dessen Faserorientierung in Längsrichtung (L) verläuft.

### Bezugszeichenliste

- 100: Windenergieanlage
- 102: Turm
- 104: Gondel
- 106: Rotor
- 108: Rotorblätter
- 110: Spinner
- 10, 10': erstes Rotorblattsegment
- 11.1, 11.2: Druckseite, Saugseite
- 12: erste Stirnseite
- 14: Blattlaminat
- 16: Laminatschichten
- 17, 17,1, 17.2: Verstärkungsstruktur
- 18: Vorderkante
- 19: Hinterkante
- 20: zweites Rotorblattsegment
- 22: zweiten Stirnseite
- 24: Blattlaminat
- 27: Verstärkungsstruktur
- 30a, 30b, 30c, 30a', 30b', 30c', 30.1, 30.2: Montageelemente
- 32a, 32b, 32'a, 32'b: erste Kontaktfläche
- 34a, 34b, 34'a, 34'b: zweite Kontaktfläche
- 36a, 36b: endseitiger Abschnitt
- 38a, 38b: laminatseitiger Abschnitt
- 39: Toleranzbereich
- 40a, 40b, 40c, 40, 40'a, 40'b, 40'c: Montageelemente
- 42, 42a, 42b, 42c, 42, 42'a, 42'b, 42'c: erste Kontaktfläche
- 44a, 34b, 44'a, 44'b: zweite Kontaktfläche
- 46a, 46b: endseitiger Abschnitt
- 48a, 48b: Iaminatseitiger Abschnitt
- 49: Toleranzbereich
- L: Längsrichtung
- L₁: Längserstreckung
- L₂: Längserstreckung
- L₃: Längserstreckung
- Q: Profiltiefenrichtung
- D: Profildickenrichtung
- E: Ebene
- b: minimaler Abstand
- h: maximaler Abstand

## Patentansprüche

1. Rotorblatt (108) für eine Windenergieanlage (100) mit
- einer Längsrichtung (L), in welcher sich das Rotorblatt (108) erstreckt,
- mindestens einem ersten Rotorblattsegment (10, 10') mit einer ersten Stirnseite (12), und
- mindestens einem zweiten Rotorblattsegment (20) mit einer zweiten Stirnseite (22), wobei das erste Rotorblattsegment (10, 10') in Längsrichtung (L), stirnseitig mit dem zweiten Rotorblattsegment (20) gekoppelt ist,
wobei das erste und das zweite Rotorblattsegment (10, 10', 20) jeweils umfassen:
- ein Blattlaminat (14, 24) mit einer Mehrzahl von Laminatschichten (16), welche in einer Profildickenrichtung (D) gestapelt angeordnet sind, und
- eine Mehrzahl von stirnseitig angeordneten Montageelementen (30a, 30b, 30c, 30a', 30b', 30'c, 30.1, 30.2, 40a, 40b, 40c, 40a', 40b', 40'c) zum Koppeln des ersten Rotorblattsegments (10, 10') mit dem zweiten Rotorblattsegment (20),
wobei jedes der Montageelemente (30a, 30b, 30c, 30a', 30b', 30'c, 30.1, 30.2, 40a, 40b, 40c, 40a', 40b', 40'c) sich in Längsrichtung (L) erstreckt und zwei Kontaktflächen (32a, 32b, 32c, 32'a, 32'b, 32'c, 34a, 34b, 34c, 34'a, 34'b, 34'c, 42a, 42b, 42c, 42'a, 42'b, 42'c, 44a, 44b, 44c, 44'a, 44'b, 44'c) aufweist, welche quer, insbesondere orthogonal, zur Längsrichtung (L) in einem Abstand zueinander angeordnet sind, der endseitig nichtlinear abnimmt.

2. Rotorblatt (108) nach Anspruch 1,
wobei die Mehrzahl von Montageelementen (30a, 30b, 30c, 30a', 30b', 30'c, 30.1, 30.2, 40a, 40b, 40c, 40a', 40b', 40'c) in einer Ebene (E) orthogonal zur Längsrichtung (L) benachbart zueinander angeordnet sind, und
jeweils zwischen zwei benachbarten Montageelementen (30a, 30b, 30c, 30a', 30b', 30'c) ein Freiraum ausbildet wird, in welchem ein korrespondierendes Montageelement (40a, 40b, 40c, 40'a, 40'b, 40'c) derart aufgenommen ist, dass die Kontaktflächen (42a, 42b, 42c, 42'a, 42'b, 42'c, 44a, 44b, 44c, 44'a, 44'b, 44'c) des aufgenommenen Montageelements (40a, 40b, 40c, 40'a, 40'b, 40'c) mit jeweils einer der Kontaktflächen (32a, 32b, 32c, 32'a, 32'b, 32'c, 34a, 34b, 34c, 34'a, 34'b, 34`c) der zwei benachbarten Montageelemente (30a, 30b, 30c, 30a', 30b', 30'c) in Anlage sind.

3. Rotorblatt (108) nach Anspruch 2,
wobei die in Anlage stehenden Kontaktflächen (42a, 42b, 42c, 42'a, 42'b, 42'c, 44a, 44b, 44c, 44'a, 44'b, 44'c) des aufgenommenen Montageelements (40, 40a, 40b, 40c, 40, 40'a, 40'b, 40'c) und die Kontaktflächen (32a, 32b, 32c, 32'a, 32'b, 32'c, 34a, 34b, 34c, 34'a, 34'b, 34`c) der zwei benachbarten Montageelemente (30a, 30b, 30c, 30a', 30b', 30c') stoffschlüssig miteinander verbunden sind, insbesondere mittels eines Klebstoffes, welcher auf die Kontaktflächen (32a, 32b, 32c, 32'a, 32'b, 32'c, 34a, 34b, 34c, 34'a, 34'b, 34'c ) der zwei benachbarten Montageelemente und/oder die Kontaktflächen (42a, 42b, 42c, 42'a, 42'b, 42'c, 44a, 44b, 44c, 44'a, 44'b, 44'c) des aufgenommenen Montageelements aufgebracht ist.

4. Rotorblatt (108) nach einem der vorstehenden Ansprüche,
wobei das erste und das zweite Rotorblattsegment (10, 10', 20) ferner jeweils umfassen:
- mindestens eine Verstärkungsstruktur (17, 17.1, 17.2, 27) zur Aufnahme von Längskräften, welche sich entlang des Rotorblattsegments (10, 10', 20) in Längsrichtung (L) erstreckt,
wobei die Montageelemente (30a, 30b, 30c, 30a', 30b', 30c') jeweils stirnseitig im Bereich der jeweiligen Verstärkungsstruktur (17, 17.1, 17.2, 27) angeordnet sind, und die Verstärkungsstruktur (17, 17.1, 17.2) des ersten Rotorblattsegments (10, 10') mit der Verstärkungsstruktur (27) des zweiten Rotorblattsegments (20) koppeln,
wobei vorzugsweise die Verstärkungsstruktur (17, 17.1, 17.2, 27) mindestens eine Laminatschicht, vorzugsweise eine Mehrzahl von Laminatschichten, aus einem unidirektionalen Gelege aufweist, welches in Längsrichtung (L) orientiert ist.

5. Rotorblatt (108) nach einem der vorstehenden Ansprüche,
wobei die Montageelemente (30b, 30b`, 40b, 40b`) einen laminatseitigen Abschnitt (38b, 38'b, 48b, 48`b) und einen endseitigen Abschnitt (36b, 36'b, 46b, 46`b) aufweisen, und der Verlauf der Kontaktflächen (32b, 32'b, 34b, 34'b, 42b, 42'b, 44b, 44`b) in dem laminatseitigen Abschnitt (38b, 38'b, 48b, 48`b) und/oder dem endseitigen Abschnitt (38b, 38'b, 48b, 48`b) relativ zu der Längsrichtung (L) durch eine tangentiale Randbedingung definiert ist, und/oder
wobei die Montageelemente (30a, 30a', 40a, 40a`) einen laminatseitigen Abschnitt (38a, 38'a, 48a, 48`a) und einen endseitigen Abschnitt (36a, 36'a, 46a, 46`a) aufweisen, bzw. den laminatseitigen Abschnitt (38b, 38'b, 48b, 48`b) und den endseitigen Abschnitt (36b, 36'b, 46b, 46`b) aufweisen, und der Abstand der Kontaktflächen (32a, 32'a, 34a, 34'a, 42a, 42'a, 44a, 44'a) in dem laminatseitigen Abschnitt (38a, 38'a, 48a, 48'a, 38b, 38'b, 48b, 48'b ) und/oder in dem endseitigen Abschnitt (36a, 36'a, 46a, 46'a, 36a, 36'a, 46a, 46'a ) zumindest abschnittsweise konstant ist.

6. Rotorblatt (108) nach Anspruch 5,
wobei die Kontaktflächen (32'b, 34'b, 42'b, 44`b) in der Profildickenrichtung (D) beabstandet zueinander sind, und sich die Kontaktflächen (32'b, 34'b, 42'b, 44`b) endseitig an eine Laminatschicht (16) des Blattlaminats (14, 24) bzw. eine sich parallel zu den Laminatschichten (16) erstreckende Ebene, asymptotisch in annähern, oder
wobei die Kontaktflächen (32'b, 34'b, 42'b, 44`b) in der Profildickenrichtung (D) beabstandet zueinander sind, und der Abstand zumindest abschnittweise konstant ist und die Kontaktflächen (32'b, 34'b, 42'b, 44`b) abschnittsweise parallel zu den Laminatschichten (16) des Blattlaminats (14, 24) und/oder der Verstärkungsstruktur (17, 17.1, 17.2, 27) verlaufen.

7. Rotorblatt (108) nach mindestens einem der Ansprüche 5 bis 6,
wobei der laminatseitige Abschnitt (38a, 38'a, 48a, 48'a, 38b, 38'b, 48b, 48`b) eine Längserstreckung L₁ und der endseitige Abschnitt (36a, 36'a, 46a, 46'a, 36b, 36'b, 46b, 46`b) eine Längserstreckung L₂ aufweist, und die Längserstreckung L₁ größer ist, als die Längserstreckung L₂, wobei angrenzend an den laminatseitigen Abschnitt ein Toleranzbereich ausgebildet wird.

8. Rotorblatt (108) nach Anspruch 6,
wobei die Montageelemente (30a, 30b, 40a, 40b, 30`a, 30'b, 40`a, 40b`) eine Längserstreckung L₃ aufweisen, und das Verhältnis eines maximalen Abstandes (h) der Kontaktflächen (32a, 32b, 32c, 32'a, 32'b, 32'c, 34a, 34b, 34c, 34'a, 34'b, 34'c, 42a, 42b, 42c, 42'a, 42'b, 42'c, 44a, 44b, 44c, 44'a, 44'b, 44'c) zu der Längserstreckung L₃ ≥ 5h ist.

9. Rotorblatt (108) nach Anspruch 7 oder 8,
wobei die Längserstreckung L₃ eine erste Längserstreckung L_{3.1} mindestens eines ersten Montageelements (30.1, 40.1) ist, und
das erste und das zweite Rotorblattsegment (10, 10', 20) ferner jeweils mindestens ein zweites Montageelement (30.2) mit einer zweiten Längserstreckung L_{3.2}, umfasst, welche größer ist als die Längserstreckung L_{3.1}.

10. Rotorblatt (108) nach einem der vorstehenden Ansprüche,
wobei die Mehrzahl von Montageelementen (30a, 30b, 30c, 30'a, 30'b, 30'c, 40a, 40b, 40c, 40'a, 40'b, 40'c) in Längsrichtung (L) versetzt bzw. beabstandet zueinander angeordnet sind, und/oder
wobei der minimale Abstand (b) der Kontaktflächen (32a, 32b, 32c, 32'a, 32'b, 32'c, 34a, 34b, 34c, 34'a, 34'b, 34'c, 42a, 42b, 42c, 42'a, 42'b, 42'c, 44a, 44b, 44c, 44'a, 44'b, 44`c) von zwei benachbarten Montageelementen (30a, 30b, 30c, 30'a, 30'b, 30'c, 40a, 40b, 40c, 40'a, 40'b, 40'c) ≥ 1,5 mm ist.

11. Rotorblatt (108) nach einem der Ansprüche 4 bis 10,
wobei die Verstärkungsstruktur (17, 17.1, 17.2, 27) einen Holmgurt und/oder eine Nasenkantenverstärkung und/oder eine Hinterkantenverstärkung umfasst.

12. Windenergieanlage (100) mit mindestens einem Rotorblatt gemäß mindestens einem der vorhergehenden Ansprüche 1-11.

13. Verfahren zum Herstellen eines Rotorblattes einer Windenergieanlage (100), umfassend die Schritte:
- Bereitstellen eines ersten Rotorblattsegments (10, 10'),
- Bereitstellen mindestens eines zweiten Rotorblattsegments (20),
- In-Eingriff-Bringen der Mehrzahl von stirnseitig angeordneten Montageelementen (30a, 30b, 30c, 30a', 30b', 30c') des ersten Rotorblattsegments (10, 10') mit den korrespondieren Montageelementen (40a, 40b, 40c, 40'a, 40'b, 40'c) des zweiten Rotorblattsegments (20),
wobei das erste Rotorblattsegment (10, 10') und das zweite Rotorblattsegment (20) jeweils ausgebildet sind mit
- einer Stirnseite (12),
wobei das Rotorblattsegment (10, 10') in Längsrichtung stirnseitig mit einem benachbarten Rotorblattsegment (20) koppelbar ist,
- einem Blattlaminat (14) mit einer Mehrzahl von Laminatschichten (16), welche in einer Profildickenrichtung (D) gestapelt sind, und
- einer Mehrzahl von stirnseitig angeordneten Montageelementen (30a, 30b, 30c, 30a', 30b', 30'c, 30.1, 30.2, 40a, 40b, 40c, 40a', 40b', 40'c), welche zum Koppeln des ersten Rotorblattsegments (10, 10') mit dem zweiten Rotorblattsegment (20) mit einer Mehrzahl korrespondierender Montageelemente (30a, 30b, 30c, 30a', 30b', 30'c, 30.1, 30.2, 40a, 40b, 40c, 40a', 40b', 40'c) des benachbarten Rotorblattsegments in Eingriff bringbar sind,
wobei jedes der Montageelemente (30a, 30b, 30c, 30a', 30b', 30'c, 30.1, 30.2, 40a, 40b, 40c, 40a', 40b', 40'c) sich in Längsrichtung (L) erstreckt und zwei Kontaktflächen (32a, 32b, 32c, 32'a, 32'b, 32'c, 34a, 34b, 34c, 34'a, 34'b, 34'c, 42a, 42b, 42c, 42'a, 42'b, 42'c, 44a, 44b, 44c, 44'a, 44'b, 44'c) aufweist, welche quer, insbesondere orthogonal zur Längsrichtung (L) in einem Abstand zueinander angeordnet sind, der endseitig nichtlinear abnimmt.

14. Verfahren nach Anspruch 13,
wobei die Mehrzahl von Montageelementen (30a, 30b, 30c, 30a', 30b', 30c', 40a, 40b, 40c, 40'a, 40'b, 40'c) in einer Ebene (E) orthogonal zur Längsrichtung (L) benachbart zueinander angeordnet sind, und jeweils zwischen zwei benachbarte Montageelementen (30a, 30b, 30c, 30a', 30b', 30c', 40a, 40b, 40c, 40'a, 40'b, 40'c) ein Freiraum ausbildet wird, und
wobei der Schritt des In-Eingriff-Bringens ferner umfasst:
- Aufnehmen jeweils eines der korrespondierenden Montageelemente (40a, 40b, 40c, 40'a, 40'b, 40'c) in jedem der Freiräume, sodass die Kontaktflächen (42a, 42b, 42c, 42'a, 42'b, 42'c, 44a, 44b, 44c, 44'a, 44'b, 44'c) jedes aufgenommenen Montageelements (40a, 40b, 40c, 40'a, 40'b, 40'c) mit jeweils einer der Kontaktflächen (32a, 32b, 32c, 32'a, 32'b, 32'c, 34a, 34b, 34c, 34'a, 34'b, 34`c) der zwei benachbarten Montageelemente (30a, 30b, 30c, 30a', 30b', 30c') in Anlage sind.

15. Verfahren nach Anspruch 14,
wobei das Verfahren vor dem Schritt des In-Eingriff-Bringens ferner den Schritt umfasst:
- Aufbringen eines Klebstoffes auf jede der Kontaktflächen (32a, 32b, 32c, 32'a, 32'b, 32'c, 34a, 34b, 34c, 34'a, 34'b, 34'c, 42a, 42b, 42c, 42'a, 42'b, 42'c, 44a, 44b, 44c, 44'a, 44'b, 44'c) des ersten (10, 10') und/oder zweiten Rotorblattsegments (20).

## Claims

1. A rotor blade (108) for a wind power installation (100) with
- a longitudinal direction (L) in which the rotor blade (108) extends,
- at least one first rotor blade segment (10, 10') with a first end face (12), and
- at least one second rotor blade segment (20) with a second end face (22), wherein the first rotor blade segment (10, 10') is coupled on the end face in the longitudinal direction (L) to the second rotor blade segment (20),
wherein the first and second rotor blade segments (10, 10', 20) each comprise:
- a blade laminate (14, 24) with a plurality of laminate layers (16), which are arranged stacked in a profile thickness direction (D), and
- arranged on the end face, a plurality of mounting elements (30a, 30b, 30c, 30a', 30b', 30'c, 30.1, 30.2, 40a, 40b, 40c, 40a', 40b', 40'c) for coupling the first rotor blade segment (10, 10') to the second rotor blade segment (20),
wherein each of the mounting elements (30a, 30b, 30c, 30a', 30b', 30'c, 30.1, 30.2, 40a, 40b, 40c, 40a', 40b', 40'c) extends in the longitudinal direction (L) and has two contact faces (32a, 32b, 32c, 32'a, 32'b, 32'c, 34a, 34b, 34c, 34'a, 34'b, 34'c, 42a, 42b, 42c, 42'a, 42'b, 42'c, 44a, 44b, 44c, 44'a, 44'b, 44'c) which are arranged transversely, in particular orthogonally to the longitudinal direction (L) at a distance from one another which diminishes in non-linear fashion towards the end.

2. The rotor blade (108) as claimed in claim 1,
wherein the plurality of mounting elements (30a, 30b, 30c, 30a', 30b', 30'c, 30.1, 30.2, 40a, 40b, 40c, 40a', 40b', 40'c) are arranged adjacent to one another in a plane (E) orthogonal to the longitudinal direction (L), and
between each two adjacent mounting elements (30a, 30b, 30c, 30a', 30b', 30'c), a free space is formed in which a corresponding mounting element (40a, 40b, 40c, 40'a, 40'b, 40'c) is received such that the contact faces (42a, 42b, 42c, 42'a, 42'b, 42'c, 44a, 44b, 44c, 44'a, 44'b, 44'c) of the received mounting element (40a, 40b, 40c, 40'a, 40'b, 40'c) are each in contact with one of the contact faces (32a, 32b, 32c, 32'a, 32'b, 32'c, 34a, 34b, 34c, 34'a, 34'b, 34`c) of the two adjacent mounting elements (30a, 30b, 30c, 30a', 30b', 30'c).

3. The rotor blade (108) as claimed in claim 2,
wherein the contacting contact faces (42a, 42b, 42c, 42'a, 42'b, 42'c, 44a, 44b, 44c, 44'a, 44'b, 44'c) of the received mounting element (40, 40a, 40b, 40c, 40, 40'a, 40'b, 40'c) and the contact faces (32a, 32b, 32c, 32'a, 32'b, 32'c, 34a, 34b, 34c, 34'a, 34'b, 34`c) of the two adjacent mounting elements (30a, 30b, 30c, 30a', 30b', 30c') are connected together by substance bonding, in particular by means of an adhesive which is applied to the contact faces (32a, 32b, 32c, 32'a, 32'b, 32'c, 34a, 34b, 34c, 34'a, 34'b, 34`c) of the two adjacent mounting elements and/or the contact faces (42a, 42b, 42c, 42'a, 42'b, 42'c, 44a, 44b, 44c, 44'a, 44'b, 44'c) of the received mounting element.

4. The rotor blade (108) as claimed in any of the preceding claims,
wherein the first and the second rotor blade segments (10, 10', 20) each furthermore comprise:
- at least one reinforcing structure (17, 17.1, 17.2, 27) for receiving longitudinal forces which extend in the longitudinal direction (L) along the rotor blade segment (10, 10', 20),
wherein the mounting elements (30a, 30b, 30c, 30a', 30b', 30c') are each arranged on the end face in the region of the respective reinforcing structure (17, 17.1, 17.2, 27), and couple the reinforcing structure (17, 17.1, 17.2) of the first rotor blade segment (10, 10') to the reinforcing structure (27) of the second rotor blade segment (20),
wherein preferably the reinforcing structure (17, 17.1, 17.2, 27) has at least one laminate layer, preferably a plurality of laminate layers, of a unidirectional lay which is oriented in the longitudinal direction (L).

5. The rotor blade (108) as claimed in any of the preceding claims,
wherein the mounting elements (30b, 30b`, 40b, 40b`) have a laminate-side portion (38b, 38'b, 48b, 48`b) and an end-side portion (36b, 36'b, 46b, 46`b), and
the course of the contact faces (32b, 32'b, 34b, 34'b, 42b, 42'b, 44b, 44`b) in the laminate-side portion (38b, 38'b, 48b, 48`b) and/or the end-side portion (38b, 38'b, 48b, 48`b) relative to the longitudinal direction (L) is defined by a tangential peripheral condition, and/or
wherein the mounting elements (30a, 30a', 40a, 40a`) have a laminate-side portion (38a, 38'a, 48a, 48`a) and an end-side portion (36a, 36'a, 46a, 46`a), or the laminate-side portion (38b, 38'b, 48b, 48`b) and the end-side portion (36b, 36'b, 46b, 46`b), and the spacing of the contact faces (32a, 32'a, 34a, 34'a, 42a, 42'a, 44a, 44'a) in the laminate-side portion (38a, 38'a, 48a, 48'a, 38b, 38'b, 48b, 48`b) and/or in the end-side portion (36a, 36'a, 46a, 46'a, 36a, 36'a, 46a, 46`a) is constant at least in portions.

6. The rotor blade (108) as claimed in claim 5,
wherein the contact faces (32'b, 34'b, 42'b, 44`b) are spaced apart from one another in the profile thickness direction (D), and
the contact faces (32'b, 34'b, 42'b, 44`b) on the face end draw asymptotically closer to a laminate layer (16) of the blade laminate (14, 24) or a plane extending parallel to the laminate layers (16), or
wherein the contact faces (32`b, 34`b, 42`b, 44`b) are spaced apart from one another in the profile thickness direction (D), and
the spacing is constant at least in portions and the contact faces (32`b, 34`b, 42`b, 44`b) run in portions parallel to the laminate layers (16) of the blade laminate (14, 24) and/or the reinforcing structure (17, 17.1, 17.2, 27).

7. The rotor blade (108) as claimed in at least one of claims 5 to 6,
wherein the laminate-side portion (38a, 38'a, 48a, 48'a, 38b, 38'b, 48b, 48`b) has a longitudinal extent L₁ and the end-side portion (36a, 36'a, 46a, 46'a, 36b, 36'b, 46b, 46`b) has a longitudinal extent L₂, and the longitudinal extent L₁ is greater than the longitudinal extent L₂, wherein a tolerance region is formed adjacent to the laminate-side portion.

8. The rotor blade (108) as claimed in claim 6,
wherein the mounting elements (30a, 30b, 40a, 40b, 30`a, 30'b, 40'a, 40b`) have a longitudinal extent L₃, and the ratio of the maximum spacing (h) of the contact faces (32a, 32b, 32c, 32'a, 32'b, 32'c, 34a, 34b, 34c, 34'a, 34'b, 34'c, 42a, 42b, 42c, 42'a, 42'b, 42'c, 44a, 44b, 44c, 44'a, 44'b, 44'c) to the longitudinal extent is L₃ ≥ 5h.

9. The rotor blade (108) as claimed in claim 7 or 8,
wherein the longitudinal extent L₃ is a first longitudinal extent L_{3.1} of at least one first mounting element (30.1, 40.1), and
the first and second rotor blade segments (10, 10', 20) each furthermore comprise at least one second mounting element (30.2) with a second longitudinal extent L_{3.2} which is greater than the first longitudinal extent L_{3.1}.

10. The rotor blade (108) as claimed in any of the preceding claims,
wherein the plurality of mounting elements (30a, 30b, 30c, 30'a, 30'b, 30'c, 40a, 40b, 40c, 40'a, 40'b, 40'c) are arranged spaced apart from or offset to one another in the longitudinal direction (L), and/or
wherein the minimum spacing (b) of the contact faces (32a, 32b, 32c, 32'a, 32'b, 32'c, 34a, 34b, 34c, 34'a, 34'b, 34'c, 42a, 42b, 42c, 42'a, 42'b, 42'c, 44a, 44b, 44c, 44'a, 44'b, 44`c) of two adjacent mounting elements (30a, 30b, 30c, 30'a, 30'b, 30'c, 40a, 40b, 40c, 40'a, 40'b, 40'c) is ≥ 1.5 mm.

11. The rotor blade (108) as claimed in any of claims 4 to 10,
wherein the reinforcing structure (17, 17.1, 17.2, 27) comprises a spar and/or a leading edge reinforcement and/or a trailing edge reinforcement.
- an end face (12),
wherein the rotor blade segment (10, 10') can be coupled on the end face in the longitudinal direction to an adjacent rotor blade segment (20),
- a blade laminate (14) with a plurality of laminate layers (16), which are stacked in a profile thickness direction (D), and
- arranged on the end face, a plurality of mounting elements (30a, 30b, 30c, 30a', 30b', 30'c, 30.1, 30.2, 40a, 40b, 40c, 40a', 40b', 40'c) which, for coupling the first rotor blade segment (10, 10') to the second rotor blade segment (20), can be brought into engagement with a plurality of corresponding mounting elements (30a, 30b, 30c, 30a', 30b', 30'c, 30.1, 30.2, 40a, 40b, 40c, 40a', 40b', 40'c) of the adjacent rotor blade segment,
wherein each of the mounting elements (30a, 30b, 30c, 30a', 30b', 30'c, 30.1, 30.2, 40a, 40b, 40c, 40a', 40b', 40'c) extends in the longitudinal direction (L) and has two contact faces (32a, 32b, 32c, 32'a, 32'b, 32'c, 34a, 34b, 34c, 34'a, 34'b, 34'c, 42a, 42b, 42c, 42'a, 42'b, 42'c, 44a, 44b, 44c, 44'a, 44'b, 44'c) which are arranged transversely, in particular orthogonally to the longitudinal direction (L) at a distance from one another which diminishes in nonlinear fashion towards the end.

12. A wind power installation (100) with at least one rotor blade as claimed in at least one of preceding claims 1-11.

13. A method of manufacturing a rotor blade of a wind power installation (100), comprising the steps:
- provision of a first rotor blade segment (10, 10'),
- provision of at least one second rotor blade segment (20),
- bringing the plurality of mounting elements (30a, 30b, 30c, 30a', 30b', 30c') arranged on the end face of the first rotor blade segment (10, 10') into engagement with the corresponding mounting elements (40a, 40b, 40c, 40'a, 40'b, 40'c) of the second rotor blade segment (20),
wherein the first rotor blade segment (10, 10') and the second rotor blade segment (20) are each formed with
- an end face (12),
wherein the rotor blade segment (10, 10') can be coupled on the end face in the longitudinal direction to an adjacent rotor blade segment (20),
- a blade laminate (14) with a plurality of laminate layers (16), which are stacked in a profile thickness direction (D), and
- arranged on the end face, a plurality of mounting elements (30a, 30b, 30c, 30a', 30b', 30'c, 30.1, 30.2, 40a, 40b, 40c, 40a', 40b', 40'c) which, for coupling the first rotor blade segment (10, 10') to the second rotor blade segment (20), can be brought into engagement with a plurality of corresponding mounting elements (30a, 30b, 30c, 30a', 30b', 30'c, 30.1, 30.2, 40a, 40b, 40c, 40a', 40b', 40'c) of the adjacent rotor blade segment,
wherein each of the mounting elements (30a, 30b, 30c, 30a', 30b', 30'c, 30.1, 30.2, 40a, 40b, 40c, 40a', 40b', 40'c) extends in the longitudinal direction (L) and has two contact faces (32a, 32b, 32c, 32'a, 32'b, 32'c, 34a, 34b, 34c, 34'a, 34'b, 34'c, 42a, 42b, 42c, 42'a, 42'b, 42'c, 44a, 44b, 44c, 44'a, 44'b, 44'c) which are arranged transversely, in particular orthogonally to the longitudinal direction (L) at a distance from one another which diminishes in nonlinear fashion towards the end.

14. The method as claimed in claim 13,
wherein the plurality of mounting elements (30a, 30b, 30c, 30a', 30b', 30c', 40a, 40b, 40c, 40'a, 40'b, 40'c) are arranged adjacent to one another in a plane (E) orthogonal to the longitudinal direction (L), and a free space is formed between each two adjacent mounting elements (30a, 30b, 30c, 30a', 30b', 30c', 40a, 40b, 40c, 40'a, 40'b, 40'c), and
wherein the step of bringing into engagement furthermore comprises:
- receiving of a respective one of the corresponding mounting elements (40a, 40b, 40c, 40'a, 40'b, 40'c) in each of the free spaces so that the contact faces (42a, 42b, 42c, 42'a, 42'b, 42'c, 44a, 44b, 44c, 44'a, 44'b, 44'c) of each received mounting element (40a, 40b, 40c, 40'a, 40'b, 40'c) are in contact with a respective one of the contact faces (32a, 32b, 32c, 32'a, 32'b, 32'c, 34a, 34b, 34c, 34'a, 34'b, 34`c) of the two adjacent mounting elements (30a, 30b, 30c, 30a', 30b', 30c').

15. The method as claimed in claim 14,
wherein before the step of bringing into engagement, the method furthermore comprises the step:
- application of an adhesive to each of the contact faces (32a, 32b, 32c, 32'a, 32'b, 32'c, 34a, 34b, 34c, 34'a, 34'b, 34'c, 42a, 42b, 42c, 42'a, 42'b, 42'c, 44a, 44b, 44c, 44'a, 44'b, 44'c) of the first (10, 10') and/or second rotor blade segment (20).

## Revendications

1. Pale de rotor (108) pour une éolienne (100) avec
- une direction longitudinale (L), dans laquelle s'étend la pale de rotor (108),
- au moins un premier segment de pale de rotor (10, 10') avec un premier côté frontal (12), et
- au moins un deuxième segment de pale de rotor (20) avec un deuxième côté frontal (22), dans laquelle le premier segment de pale de rotor (10, 10') est couplé au deuxième segment de pale de rotor (20) côté frontal dans le sens longitudinal (L),
dans laquelle le premier et le deuxième segment de pale de rotor (10, 10', 20) comprennent chacun :
-- un stratifié de pale (14, 24) avec une multitude de couches de stratifié (16), lesquelles sont disposées de manière empilée dans une direction d'épaisseur de profilé (D), et
-- une multitude d'éléments de montage (30a, 30b, 30c, 30a', 30b', 30'c, 30.1, 30.2, 40a, 40b, 40c, 40a', 40b', 40'c) disposés côté frontal destinés à coupler le premier segment de pale de rotor (10, 10') au deuxième segment de pale de rotor (20),
dans laquelle chacun des éléments de montage (30a, 30b, 30c, 30a', 30b', 30'c, 30.1, 30.2, 40a, 40b, 40c, 40a', 40b', 40'c) s'étend dans la direction longitudinale (L) et présente deux surfaces de contact (32a, 32b, 32c, 32'a, 32'b, 32'c, 34a, 34b, 34c, 34'a, 34'b, 34'c, 42a, 42b, 42c, 42'a, 42'b, 42'c, 44a, 44b, 44c, 44'a, 44'b, 44'c), lesquelles sont disposées de manière transversale, en particulier de manière orthogonale, par rapport à la direction longitudinale (L), à une distance les unes par rapport aux autres, qui diminue de manière non linéaire côté extrémité.

2. Pale de rotor (108) selon la revendication 1, dans laquelle la multitude d'éléments de montage (30a, 30b, 30c, 30a', 30b', 30'c, 30.1, 30.2, 40a, 40b, 40c, 40a', 40b', 40'c) sont disposés de manière adjacente les uns par rapport aux autres dans un plan (E) de manière orthogonale par rapport à la direction longitudinale (L), et
est réalisé respectivement, entre deux éléments de montage (30a, 30b, 30c, 30a', 30b', 30'c) adjacents, un espace libre, dans lequel un élément de montage (40a, 40b, 40c, 40'a, 40'b, 40'c) correspondant est logé de telle manière que les surfaces de contact (42a, 42b, 42c, 42'a, 42'b, 42'c, 44a, 44b, 44c, 44'a, 44'b, 44'c) de l'élément de montage (40a, 40b, 40c, 40'a, 40'b, 40'c) logé sont en appui avec respectivement une des surfaces de contact (32a, 32b, 32c, 32'a, 32'b, 32'c, 34a, 34b, 34c, 34'a, 34'b, 34'c) des deux éléments de montage (30a, 30b, 30c, 30a', 30b', 30'c) adjacents.

3. Pale de rotor (108) selon la revendication 2,
dans laquelle les surfaces de contact (42a, 42b, 42c, 42'a, 42'b, 42'c, 44a, 44b, 44c, 44'a, 44'b, 44'c) en appui de l'élément de montage (40, 40a, 40b, 40c, 40, 40'a, 40'b, 40'c) logé et les surfaces de contact (32a, 32b, 32c, 32'a, 32'b, 32'c, 34a, 34b, 34c, 34'a, 34'b, 34'c) des deux éléments de montage (30a, 30b, 30c, 30a', 30b', 30c') adjacents sont reliées les unes aux autres par liaison de matière, en particulier au moyen d'une colle, laquelle est appliquée sur les surfaces de contact (32a, 32b, 32c, 32'a, 32'b, 32'c, 34a, 34b, 34c, 34'a, 34'b, 34'c) des deux éléments de montage adjacents et/ou sur les surfaces de contact (42a, 42b, 42c, 42'a, 42'b, 42'c, 44a, 44b, 44c, 44'a, 44'b, 44'c) de l'élément de montage logé.

4. Pale de rotor (108) selon l'une quelconque des revendications précédentes,
dans laquelle le premier et le deuxième segment de pale de rotor (10, 10', 20) comprennent chacun en outre :
- au moins une structure de renforcement (17, 17.1, 17.2, 27) destinée à absorber des forces longitudinales, laquelle s'étend le long du segment de pale de rotor (10, 10', 20) dans le sens longitudinal (L),
dans laquelle les éléments de montage (30a, 30b, 30c, 30a', 30b', 30c') sont chacun disposés côté frontal dans la zone de la structure de renforcement (17, 17.1, 17.2) respective, et la structure de renforcement (17, 17.1, 17.2) du premier segment de pale de rotor (10, 10') est couplée à la structure de renforcement (27) du deuxième segment de pale de rotor (20),
dans laquelle de préférence la structure de renforcement (17, 17.1, 17.2, 27) présente au moins une couche de stratifié, de préférence une multitude de couches de stratifié, en un tissu unidirectionnel, lequel est orienté dans la direction longitudinale (L).

5. Pale de rotor (108) selon l'une quelconque des revendications précédentes,
dans laquelle les éléments de montage (30b, 30b', 40b, 40b') présentent une section côté stratifié (38b, 38'b, 48b, 48'b) et une section côté extrémité (36b, 36'b, 46b, 46'b), et le profil des surfaces de contact (32b, 32'b, 34b, 34'b, 42b, 42'b, 44b, 44'b) est défini par une condition marginale tangentielle par rapport à la direction longitudinale (L) dans la section côté stratifié (38b, 38'b, 48b, 48'b) et/ou dans la section côté extrémité (38b, 38'b, 48b, 48'b), et/ou
dans laquelle les éléments de montage (30a, 30a', 40a, 40a') présentent une section côté stratifié (38a, 38'a, 48a, 48'a) et une section côté extrémité (36a, 36'a, 46a, 46'a), ou présentent la section côté stratifié (38b, 38'b, 48b, 48'b) et la section côté extrémité (36b, 36'b, 46b, 46'b), et la distance des surfaces de contact (32a, 32'a, 34a, 34'a, 42a, 42'a, 44a, 44'a) dans la section côté stratifié (38a, 38'a, 48a, 48'a, 38b, 38'b, 48b, 48'b) et/ou dans la section côté extrémité (36a, 36'a, 46a, 46'a, 36a, 36'a, 46a, 46'a) est constante au moins par endroits.

6. Pale de rotor (108) selon la revendication 5,
dans laquelle les surfaces de contact (32'b, 34'b, 42'b, 44'b) sont espacées les unes par rapport aux autres dans la direction d'épaisseur de profilé (D) et les surfaces de contact (32'b, 34'b, 42'b, 44'b) se rapprochent de manière asymptotique côté extrémité d'une couche de stratifié (16) du stratifié de pale (14, 24) ou d'un plan s'étendant de manière parallèle aux couches de stratifié (16), ou
dans laquelle les surfaces de contact (32'b, 34'b, 42'b, 44'b) sont espacées les unes par rapport aux autres dans la direction d'épaisseur de profilé (D), et la distance est constante au moins par endroits et les surfaces de contact (32'b, 34'b, 42'b, 44'b) s'étendent par endroits de manière parallèle aux couches de stratifié (16) du stratifié de pale (14, 24) et/ou de la structure de renforcement (17, 17.1, 17.2, 27).

7. Pale de rotor (108) selon au moins l'une quelconque des revendications 5 à 6,
dans laquelle la section côté stratifié (38a, 38'a, 48a, 48'a, 38b, 38'b, 48b, 48'b) présente une extension longitudinale L₁ et la section côté extrémité (36a, 36'a, 46a, 46'a, 36b, 36'b, 46b, 46'b) présente une extension longitudinale L₂, et l'extension longitudinale L₁ est plus grande que l'extension longitudinale L₂, dans laquelle une zone de tolérance est réalisée de manière à jouxter la section côté stratifié.

8. Pale de rotor (108) selon la revendication 6, dans laquelle les éléments de montage (30a, 30b, 40a, 40b, 30'a, 30'b, 40'a, 40b') présentent une extension longitudinale L₃, et le rapport entre une distance maximale (h) des surfaces de contact (32a, 32b, 32c, 32'a, 32'b, 32'c, 34a, 34b, 34c, 34'a, 34'b, 34'c, 42a, 42b, 42c, 42'a, 42'b, 42'c, 44a, 44b, 44c, 44'a, 44'b, 44'c) et l'extension longitudinale L₃ est ≥ 5h.

9. Pale de rotor (108) selon la revendication 7 ou 8,
dans laquelle l'extension longitudinale L₃ est une première extension longitudinale L_{3.1} d'au moins un premier élément de montage (30.1, 40.1), et
le premier et le deuxième segment de pale de rotor (10, 10', 20) comprennent en outre respectivement au moins un deuxième élément de montage (30.2) avec une deuxième extension longitudinale L_{3.2}, laquelle est plus grande que l'extension longitudinale L_{3.1}.

10. Pale de rotor (108) selon l'une quelconque des revendications précédentes,
dans laquelle la multitude d'éléments de montage (30a, 30b, 30c, 30'a, 30'b, 30'c, 40a, 40b, 40c, 40'a, 40'b, 40'c) sont disposés de manière décalée dans la direction longitudinale (L) ou de manière espacée les uns par rapport aux autres, et/ou
dans laquelle la distance (b) minimale des surfaces de contact (32a, 32b, 32c, 32'a, 32'b, 32'c, 34a, 34b, 34c, 34'a, 34'b, 34'c, 42a, 42b, 42c, 42'a, 42'b, 42c, 44a, 44b, 44c, 44'a, 44'b, 44'c) par rapport aux deux éléments de montage (30a, 30b, 30c, 30'a, 30'b, 30'c, 40a, 40b, 40c, 40'a, 40'b, 40'c) est ≥ 1,5 mm.

11. Pale de rotor (108) selon l'une quelconque des revendications 4 à 10,
dans laquelle la structure de renforcement (17, 17.1, 17.2, 27) comprend un longeron et/ou un renforcement de bord d'attaque et/ou un renforcement de bord de fuite.

12. Eolienne (100) avec au moins une pale de rotor selon au moins l'une quelconque des revendications précédentes 1 - 11.

13. Procédé de fabrication d'une pale de rotor d'une éolienne (100), comprenant les étapes :
- de fourniture d'un premier segment de pale de rotor (10, 10'),
- de fourniture d'au moins un deuxième segment de pale de rotor (20),
- de mise en prise de la multitude d'éléments de montage (30a, 30b, 30c, 30a', 30b', 30c') disposés côté frontal du premier segment de pale de rotor (10, 10') avec les éléments de montage (40a, 40b, 40c, 40'a, 40'b, 40'c) correspondants du deuxième segment de pale de rotor (20),
dans lequel le premier segment de pale de rotor (10, 10') et le deuxième segment de pale de rotor (20) sont chacun réalisés avec
- un côté frontal (12),
dans lequel le segment de pale de rotor (10, 10') peut être couplé dans la direction longitudinale côté frontal à un segment de pale de rotor (20) adjacent,
- un stratifié de pale (14) avec une multitude de couches de stratifié (16), lesquelles sont empilées dans une direction d'épaisseur de profilé (D), et
- une multitude d'éléments de montage (30a, 30b, 30c, 30a', 30b', 30c', 30.1, 30.2, 40a, 40b, 40c, 40a', 40b', 40'c) disposés côté frontal, lesquels peuvent être amenés en prise avec une multitude d'éléments de montage (30a, 30b, 30c, 30a', 30b', 30'c, 30.1, 30.2, 40a, 40b, 40c, 40a', 40b', 40'c) correspondants du segment de pale de rotor adjacent pour coupler le premier segment de pale de rotor (10, 10') au deuxième segment de pale de rotor (20),
dans lequel chacun des éléments de montage (30a, 30b, 30c, 30a', 30b', 30'c, 30.1, 30.2, 40a, 40b, 40c, 40a', 40b', 40'c) s'étend dans la direction longitudinale (L) et présente deux surfaces de contact (32a, 32b, 32c, 32'a, 32'b, 32'c, 34a, 34b, 34c, 34'a, 34'b, 34'c, 42a, 42b, 42c, 42'a, 42'b, 42'c, 44a, 44b, 44c, 44'a, 44'b, 44'c), lesquelles sont disposées de manière transversale, en particulier de manière orthogonale, par rapport à la direction longitudinale (L), à une distance, les unes par rapport aux autres, qui diminue de manière non linéaire côté extrémité.

14. Procédé selon la revendication 13,
dans lequel la multitude d'éléments de montage (30a, 30b, 30c, 30a', 30b', 30c', 40a, 40b, 40c, 40'a, 40'b, 40'c) sont disposés de manière adjacente les uns par rapport aux autres de manière orthogonale à la direction longitudinale (L) dans un plan (E), et un espace libre est formé respectivement entre deux éléments de montage (30a, 30b, 30c, 30a', 30b', 30c', 40a, 40b, 40c, 40'a, 40'b, 40'c) adjacents, et
dans lequel l'étape de la mise en prise comprend en outre :
- le logement respectivement d'un des éléments de montage (40a, 40b, 40c, 40'a, 40'b, 40'c) dans chacun des espaces libres si bien que les surfaces de contact (42a, 42b, 42c, 42'a, 42'b, 42'c, 44a, 44b, 44a, 44'a, 44'b, 44'c) de chaque élément de montage (40a, 40b, 40c, 40'a, 40'b, 40'c) logé sont en appui avec respectivement une des surfaces de contact (32a, 32b, 32c, 32'a, 32'b, 32'c, 34a, 34b, 34c, 34'a, 34'b, 34'c) des deux éléments de montage (30a, 30b, 30c, 30a', 30b', 30c') adjacents.

15. Procédé selon la revendication 14,
dans lequel le procédé comprend en outre, avant l'étape de la mise en prise, l'étape :
- d'application d'une colle sur chacune des surfaces de contact (32a, 32b, 32c, 32'a, 32'b, 32'c, 34a, 34b, 34c, 34'a, 34'b, 34'c, 42a, 42b, 42c, 42'a, 42'b, 42'c, 44a, 44b, 44c, 44'a, 44'b, 44'c) du premier (10, 10') et/ou du deuxième segment de pale de rotor (20) .
